# EUROPEAN PATENT APPLICATION

(11) **EP 4 752 558 A1**
(43) Date of publication of application: **03.06.2026**
(21) Application number: 25166743.2
(22) Date of filing: 27.03.2025
(51) Int. Cl.: G01N 35/02

(54) **REAGENT DISC CONTROL DEVICE**

(30) Priority: 28.11.2024 CN 202411732015; 28.11.2024 CN 202411729526
(71) Applicant: Hangzhou ShineDo Biotech. Co.Ltd., Hangzhou, Zhejiang (CN)
(72) Inventor: Wu, Lin, Hangzhou, Zhejiang (CN); Xu, Wei, Hangzhou, Zhejiang (CN); Guan, Haibing, Hangzhou, Zhejiang (CN); Fang, Jianqiu, Hangzhou, Zhejiang (CN); Zhong, Chunmei, Hangzhou, Zhejiang (CN)
(74) Representative: Petraz, Gilberto Luigi

(57) **Abstract**

The invention provides a reagent disc control device which uses a combined rotary wheel to control an inner rod and an outer rod in a locking mechanism to move. By improving the structure of the combined rotary wheel, the locking mechanism can lock and release a reagent disc more stably and smoothly. Even if the rotary wheel is in direct contact with the locking mechanism, the locking mechanism will not shake. In this way, the reagent disc control device is simpler in structure and higher in response speed, and ensures the operating stability of the locking mechanism, thereby ensuring the accuracy of fluorescence detection reading in the reagent disc. Moreover, the reagent disc control device can complete more precise and complicated actions, so that the locking mechanism can switch between an initial state and a working state flexibly. The locking mechanism is allowed to return to the initial state when it is not working, and to enter the working state when it needs to work. Springs in the locking mechanism do not need to be in a compressed state for a long time, and can be reused many times, thereby prolonging the service life and lowering the cost.

## Description

### BACKGROUND OF THE INVENTION

### Field of the Invention

The invention belongs to the technical field of biochemical testing equipment, and particularly relates to a reagent disc control device.

### Description of the Related Art

Biochemical analyzers, also known as biochemistry analyzers, are instruments that use photoelectric colorimetry to measure a specific chemical component in body fluids. Biochemical analyzers have been widely used in hospitals, epidemic prevention stations and family planning service stations at all levels because of their high measurement speed, high accuracy and low reagent consumption. Use of biochemical analyzers can greatly improve efficiency and profitability of routine biochemical testing. Automated biochemical analyzers can be used for various reaction types of assay determinations such as fixed-time assay and continuous monitoring assay. In addition to the determination of general biochemical items, some biochemical analyzers can also be used in the determination of special compounds such as hormones, immunoglobulins and blood drug concentrations, as well as the application of assay methods such as enzyme immunoassay and fluoroimmunoassay. The biochemical analyzers are rapid, simple, sensitive, accurate and standardized and can be used for trace detection. In actual biochemical analysis, it is required to put a reagent disc into the biochemical analyzer, lock the reagent disc with a reagent disc control device and perform centrifugation and detection, so the reagent disc control device is a key device for the biochemical analyzer, which is required to accurately lock and release the reagent disc.

The main working principle of the reagent disc control device is to drive a locking mechanism to move up or down through rotation of a rotary wheel so as to lock and release the reagent disc. However, in the existing reagent disc control devices, the rotary wheel usually does not directly contact the locking mechanism, but a gasket or partition is arranged between the rotary wheel and the locking mechanism, and the movement is indirectly transmitted through the gasket or partition. This is mainly because it is technically difficult to directly convert the rotational movement of the rotary wheel into the up-and-down movement of the locking mechanism. The rotation of the rotary wheel brings about not only up-and-down driving force in the axial direction, but also forces in other directions, which are not easy to control and may easily cause the locking mechanism to shake, thereby affecting the accuracy of fluorescence detection reading in the reagent disc.

Therefore, in order to ensure that only the up-and-down driving force in the axial direction can be obtained from the rotation process of the rotary wheel, the existing reagent disc control devices basically add a gasket or partition between the rotary wheel and the locking mechanism. For example, in the microfluidic chip pre-packaging device provided by Chinese patent No. CN109847820A, the locking mechanism includes a push rod and a rotary wheel assembly. A lifting gasket is arranged in the rotary wheel assembly. A rotary wheel is arranged at a lower end of the lifting gasket and drives the lifting gasket to move up and down. The push rod is fixed to an upper end of the lifting gasket. The addition of the gasket not only makes the structure of the reagent disc control device more complicated, but also makes it difficult to accurately transmit the movement of the rotary wheel, causing energy loss and delayed response time.

Therefore, it is urgent to find a reagent disc control device that can control the movement of the locking mechanism more stably, so that even if there is no gasket or partition arranged between the locking mechanism and the rotary wheel, the movement of the locking mechanism can be controlled stably and smoothly, and the locking mechanism does not shake, thereby ensuring the accuracy of fluorescence detection reading in the reagent disc.

### BRIEF SUMMARY OF THE INVENTION

In order to solve the above problems, the invention provides a reagent disc control device which uses a combined rotary wheel to control an inner rod and an outer rod in a locking mechanism to move. By improving the structure of the combined rotary wheel, the locking mechanism can lock and release the reagent disc more stably and smoothly. Even if the rotary wheel is in direct contact with the locking mechanism, the locking mechanism will not shake. In this way, the reagent disc control device is simpler in structure and higher in response speed, and ensures the operating stability of the locking mechanism, thereby ensuring the accuracy of fluorescence detection reading in the reagent disc. Moreover, the reagent disc control device can complete more precise and complicated actions, so that the locking mechanism can switch between an initial state and a working state flexibly. The locking mechanism is allowed to return to the initial state when it is not working, and to enter the working state when it needs to work. The springs in the locking mechanism do not need to be in a compressed state for a long time, and can be reused many times, thereby prolonging the service life and lowering the cost.

In one aspect, the invention provides a reagent disc control device, including a rotary driving mechanism for controlling a locking mechanism to move. The rotary driving mechanism includes a combined rotary wheel formed by a first rotary wheel and a second rotary wheel, the combined rotary wheel includes a locking region and an unlocking region, the locking region is configured to drive the locking mechanism to lock a reagent disc, and the unlocking region is configured to drive the locking mechanism to unlock the reagent disc. The first rotary wheel and the second rotary wheel in the unlocking region are in a non-flush state.

The rotary driving mechanism in the invention refers to a device for driving the locking mechanism to move through rotation. In this device, it is mainly the rotary wheel (in some implementations, the rotary wheel may also be called a cam) that rotates. The shape of the surface of the rotary wheel determines the movement trajectory of the locking mechanism, and changes in the shape of the surface of the rotary wheel can cause changes in the movement trajectory of the locking mechanism.

The reagent disc control device in the invention includes the locking mechanism and the rotary driving mechanism. The reagent disc is located above the locking mechanism, and the locking mechanism is located above the rotary driving mechanism. The locking mechanism is configured to lock or release the reagent disc, and the rotary driving mechanism is configured to drive the locking mechanism to move up and down such that the locking mechanism locks or releases the reagent disc. The rotary driving mechanism includes the first rotary wheel and the second rotary wheel. The first rotary wheel and the second rotary wheel are fixed in position relative to each other and are capable of rotating synchronously. The first rotary wheel and the second rotary wheel are combined to form the combined rotary wheel.

In the existing reagent disc control device, in order to eliminate forces in other directions brought about by the movement of the rotary wheel and only obtain the up-and-down driving force in the axial direction such that the locking mechanism operates more stably, it is required to add a gasket between the rotary wheel and the locking mechanism, because once the locking mechanism operates unstably or shakes, the accuracy of the reading in the reagent disc in the detection process will be affected.

However, actually, making good use of forces in other directions brought about by the rotary wheel will be more helpful to accurately control the movement of the locking mechanism in the whole process. This is because if the gasket is used, the force can only be provided upward from the bottom of the locking mechanism as the force bearing point, and it is impossible to provide forces from any other angle, causing a large loss of forces, and moreover, the movement needs to be transmitted indirectly, causing delayed response; and if no gasket is arranged, the rotary wheel can apply forces to the bottom of the locking mechanism from multiple angles, with more options for the angle and mode of force application, less energy loss and higher response speed, so that more precise actions can be completed, for example, the locking mechanism can enter the working state from the initial state or return to the initial state from the working state. All of these are impossible with the existing locking mechanism.

The non-flush state in the invention means that there is a height difference between the first rotary wheel and the second rotary wheel and the first rotary wheel is lower than the second rotary wheel.

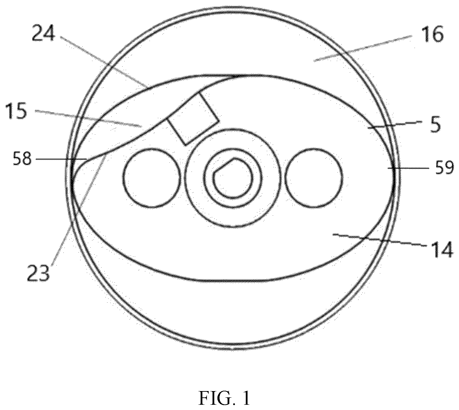

The combined rotary wheel in the existing device shown in FIG. 1 also has a locking region and an unlocking region, but only in the locking region, there is a region where there is a height difference between the first rotary wheel and the second rotary wheel, and in other positions, the first rotary wheel and the second rotary wheel are almost flush or completely overlapping. Thus, the locking mechanism is prone to shaking during the process of locking to releasing the reagent disc. This is because when the locking mechanism is in the locking state, there is a height difference between the inner rod and the outer rod and the inner rod extends out of the outer rod from a lower side, so in the process of releasing the reagent disc, if there is no distance between the first rotary wheel edge and the second rotary wheel edge and the first rotary wheel is flush with the second rotary wheel, the inner rod and the outer rod that have a height difference will directly contact the first rotary wheel edge and the second rotary wheel edge that are flush, which easily causes the inner rod and the outer rod to shake, thus causing the vibration of the reagent disc. Moreover, this process is also exactly when the test result needs to be read. The vibration of the fluorescence used for reading on the reagent disc will directly affect the reading result. As a result, although the combined rotary wheel having such a structure can complete the up-and-down movement of the locking mechanism and implement locking and releasing of the reagent disc, the combined rotary wheel cannot directly contact the locking mechanism, which causes the locking mechanism to shake (especially during the process of locking to releasing the reagent disc) and affects the accuracy of fluorescence reading in the detection result. In this case, a gasket must be used to keep the operating stability of the locking mechanism.

In the invention, by improving the shape of the combined rotary wheel, a region where there is a reasonable height difference between the first rotary wheel and the second rotary wheel is also arranged in the unlocking region of the combined rotary wheel, so that the inner rod and the outer rod that have a height difference contact the first rotary wheel edge and the second rotary wheel edge that also have a height difference, thereby driving the locking mechanism to complete the unlocking process more smoothly and stably and effectively preventing the locking mechanism from shaking. Therefore, even if the combined rotary wheel directly contacts the locking mechanism and no gasket or partition is arranged, the inner rod and the outer rod can move stably without shaking during the whole process, especially during the process of locking to releasing the reagent disc, which can better keep the movement stability of the locking mechanism and prevent the locking mechanism from shaking, affecting the reading result.

Further, the non-flush state includes there being a distance between a first rotary wheel edge and a second rotary wheel edge. The locking mechanism includes an inner rod and an outer rod, and the inner rod is located inside the outer rod. The first rotary wheel is configured to drive the inner rod to move, and the second rotary wheel is configured to drive the outer rod to move.

The outer rod is a hollow rod, and the inner rod can run through the outer rod and move up and down in the outer rod.

In some implementations, the rotary driving mechanism includes a first rotary wheel, a second rotary wheel and a support layer. The first rotary wheel and the second rotary wheel are installed on the support layer together. The first rotary wheel is on an outer side, and the second rotary wheel is located between the first rotary wheel and the support layer.

Further, the unlocking region includes a region where the distance between the first rotary wheel edge and the second rotary wheel edge first gradually increases and then gradually decreases.

The combined rotary wheel provided by the invention has an overall shape close to an ellipse which includes a major axis and a minor axis that respectively pass through the center of the ellipse. During the process of the unlocking region coming into contact with the locking mechanism, i.e., during the shift from a major axis region to a minor axis region, the second rotary wheel edge is in the shape of a regular ellipse and the first rotary wheel edge is in the shape of an oblique line, which leads to a notch. Thereby, there is a distance between the first rotary wheel edge and the second rotary wheel edge in the unlocking region, and this distance first gradually increases and then gradually decreases. With such a distance design, after the combined rotary wheel comes into contact with the locking mechanism, the height of the outer rod is kept unchanged first, and the first rotary wheel edge gradually comes into contact with the inner rod diagonally from the lower side of the inner rod and then gradually pushes up the inner rod, which is a steady and smooth process that can effectively prevent the locking mechanism from shaking.

Further, the unlocking region includes an ascending region and a releasing region, and the distance between the first rotary wheel edge and the second rotary wheel edge in the ascending region first gradually increases and then gradually decreases to a close position so as to gradually push up the inner rod while keeping the outer rod unchanged. A distance between a first rotary wheel edge and a second rotary wheel edge in the releasing region is maintained at the close position so as to make the inner rod and the outer rod leave the reagent disc together while keeping relative positions unchanged.

The entire process of unlocking the reagent disc involves the shift from the major axis region to the minor axis region of the ellipse. During the rotation process, the combined rotary wheel starts to contact the locking mechanism diagonally from the lower side to push the locking mechanism to move, rather than directly from the lower side. Therefore, if this process is not reasonably designed, it is easy to cause the locking mechanism to shake.

In the invention, by arranging the ascending region and the releasing region in the unlocking region of the combined rotary wheel, during the rotation process of the combined rotary wheel, in the ascending region, the inner rod and the outer rod that have a height difference are allowed to contact the first rotary wheel edge and the second rotary wheel edge that also have a height difference diagonally from the lower side, and then the inner rod is gradually pushed up while keeping the height of the outer rod unchanged. After a proper relative height between the inner rod and the outer rod is achieved, steel balls in the locking mechanism are retracted (the locking or unlocking of the reagent disc is realized by making the steel balls in the locking mechanism are popped out or retracted, and the specific principle will be described in detail later). Then, in the releasing region, on the premise of keeping the distance between the first rotary wheel edge and the second rotary wheel edge unchanged, i.e. keeping relative positions of the inner rod and the outer rod unchanged, the inner rod and the outer rod are allowed to move down to leave the reagent disc, so that the reagent disc is unlocked. With this design, the combined rotary wheel can directly contact the locking mechanism without adding a gasket. **In** this way, the reagent disc can be locked stably, and the movement stability of the locking mechanism can be ensured during the process of locking to unlocking the reagent disc, which can prevent the locking mechanism from shaking, affecting the reading result.

The close position means that the first rotary wheel edge is very close to the second rotary wheel edge. This position can be designed according to the characteristics of the locking mechanism. When the inner rod and the outer rod in the locking mechanism are close in position relative to each other, the steel balls can be completely aligned with steel ball grooves in the inner rod. This position is defined as the close position.

**In** some implementations, the close position means that the first rotary wheel edge is slightly lower than the second rotary wheel edge in position and there is a height difference of about 1 mm between the first rotary wheel edge and the second rotary wheel edge, because when the inner rod ascends until there is a height difference of about 1 mm from the outer rod, the steel balls are completely aligned with the steel ball grooves and the steel balls are completely inside the steel ball grooves. In this state, the contact end of the inner rod and the end cover of the outer rod can be kept in contact with the rotary wheel all the time and move synchronously, thereby realizing smooth unlocking.

Further, the locking region also includes a region where a distance between a first rotary wheel edge and a second rotary wheel edge first gradually increases and then gradually decreases.

Further, the locking region includes a first ascending region and a rapid descending region. The distance between the first rotary wheel edge and the second rotary wheel edge in the rapid descending region first gradually increases and then gradually decreases so as to make the inner rod descend rapidly and lock the reagent disc.

With the arrangement of the combined rotary wheel in the locking region, during the rotation process of the combined rotary wheel, the locking mechanism can be smoothly and steadily driven to lock the reagent disc.

Further, the unlocking region and the locking region are respectively located on two sides of the combined rotary wheel. When the combined rotary wheel rotates clockwise, the locking region is on a left side, and the unlocking region is on a right side. When the combined rotary wheel rotates counterclockwise, the locking region is on the right side, and the unlocking region is on the left side.

Theoretically, the combined rotary wheel provided by the invention can lock and release the reagent disc whether it rotates clockwise or counterclockwise, because in both cases, the combined rotary wheel has the function of allowing the locking mechanism to ascend and then allowing the inner rod in the locking mechanism to descend to lock the reagent disc.

However, it can be understood that due to different rotation directions, the combined rotary wheel comes into direct contact with the lower end of the locking mechanism from different directions. For example, when the combined rotary wheel rotates clockwise, the combined rotary wheel comes into contact with the lower end of the locking mechanism from the left lower side. When the combined rotary wheel rotates counterclockwise, the combined rotary wheel comes into contact with the lower end of the locking mechanism from the right lower side. Therefore, it is still required to adjust the shape of the rotary wheel to make it more suitable for rotation in a special direction, thereby improving the stability of the locking mechanism. For example, when the combined rotary wheel is set to rotate clockwise, the position where the rotary wheel comes into direct head-on contact with the locking mechanism should have a gentle slope to prevent shaking caused by impact force that may be brought by the head-on contact. For the position of contact after the slope, it is necessary to focus on how to keep better contact instead of considering the possible impact from the head-on contact. Therefore, considering different design focuses, it is required to properly adjust the shape of the combined rotary wheel.

Further, in the first ascending region of the locking region, a first rotary wheel edge is flush with a second rotary wheel edge.

In the locking region of the combined rotary wheel, the first rotary wheel edge gradually ascends to be flush with the second rotary wheel edge, instead of to the close position. This is a preferred structural design, mainly because this step focuses on pushing the inner rod to the end (the inner rod is at the highest relative position in the outer rod) so as to ensure that the steel balls can be smoothly popped out when the inner rod falls and prevent the reagent disc from being locked unsuccessfully, and there is no need to additionally consider whether the contact end and the end cover are in contact with the rotary wheel all the time.

Further, the first rotary wheel edge in the rapid descending region of the locking region is in a shape of a first oblique line, and the first rotary wheel edge in the ascending region of the unlocking region is in a shape of a second oblique line. A slope of the first oblique line is greater than a slope of the second oblique line.

In the locking region, it is required to push up the inner rod and the outer rod at the same time while ensuring that the inner rod is at the highest relative position in the outer rod, and then allow the inner rod to fall rapidly. The inner rod falls rapidly under the action of gravity, so the first rotary wheel edge only needs to be far enough away from the lower end of the inner rod and not to block it. Therefore, the slope can be larger. In the unlocking region, it is required to gradually push up the inner rod while keeping contact with the inner rod. Therefore, the first oblique line in the locking region and the second oblique line in the unlocking region have different functions and different slopes, and the slope of the first oblique line is greater than the slope of the second oblique line. In addition, the first oblique line and the second oblique line are both connected with other parts in the first rotary wheel through arcs, which makes the process of pushing the inner rod smooth and steady.

Further, the combined rotary wheel rotates clockwise, and in this case, the locking region is on the left side, and the unlocking region is on the right side.

Further, the reagent disc control device further includes an initial state region, configured to make the locking mechanism return to an initial state. There is a distance between a first rotary wheel edge and a second rotary wheel edge in the initial state region.

With the combined rotary wheel provided by the invention, the locking mechanism can be in direct contact with the combined rotary wheel so as to ensure the accuracy of the fluorescence detection reading in the reagent disc, and the locking mechanism can flexibly switch between the initial state and the working state.

In the invention, by arranging the initial state region close to the minor axis in the combined rotary wheel, there is a distance between the first rotary wheel edge and the second rotary wheel edge in this region, so that the locking mechanism can be in the initial state when in this position. The initial state of the locking mechanism means springs in the locking mechanism are in a natural uncompressed and unstretched state. After entering the working state, the springs of the locking mechanism are compressed, thereby completing a series of work, including entering the reagent disc, locking the reagent disc, releasing the reagent disc and exiting the reagent disc.

In the existing reagent disc control device, the locking mechanism cannot switch between the initial state and the working state, so the locking mechanism must be always kept in the working state and the springs must be always in the compressed state. The springs play a very important role in the device. For example, to lock the reagent disc, the springs are required to provide a downward pulling force to pull down the reagent disc tight, and then centrifugation can be performed. Once the elasticity of the springs is damaged due to long-time compression, the locking effect of the reagent disc will inevitably be affected, thereby affecting the service life of the device.

With the cooperative movements of the rotary wheel and the locking mechanism that are in direct contact, the reagent disc control device provided by the invention can complete more precise and complicated actions. The locking mechanism is allowed to return to the initial state when it is not working, and to enter the working state when it needs to work. **In** this way, the springs in the locking mechanism do not need to be in the compressed state for a long time, and can be reused many times, so that the springs are more durable and cannot be easily damaged.

Further, the distance between the first rotary wheel edge and the second rotary wheel edge in the initial state region first gradually increases and then gradually decreases. When the locking mechanism is in a position where the distance between the first rotary wheel edge and the second rotary wheel edge in the initial state region is the largest, the locking mechanism is in the initial state. When the locking mechanism is in other positions of the combined rotary wheel, the locking mechanism is in a working state.

Further, the reagent disc control device further includes a locking state region, configured to maintain the reagent disc in a locked state so as to perform centrifugal rotation or analysis and detection.

When the reagent disc is in the locked state, centrifugation, and analysis and detection can be performed. **In** this case, the lower end of the locking mechanism is suspended and is not in contact with the combined rotary wheel. Therefore, during this process, the combined rotary wheel only needs to be in the minor axis region of the ellipse without contacting the locking mechanism.

Further, the combined rotary wheel includes the initial state region, the first ascending region, the rapid descending region, the locking state region, the ascending region and the releasing region. During a rotation process of the combined rotary wheel, each region cooperates with the locking mechanism such that the locking mechanism is respectively in the initial state, a first ascending state, a rapid descending state, a locking state, a second ascending state and a releasing state.

Through extensive designs and screenings on the shape of the combined rotary wheel, the invention finds a rotary wheel shape design that can accurately control the movement of the locking mechanism, which greatly improves the accuracy of controlling the locking and releasing of the reagent disc and provides as many opportunities as possible to make the springs of the locking mechanism return to the natural uncompressed state.

For the shape of the rotary wheel in the existing device, only a rapid descending region for locking is arranged, and other parts are in a normal elliptical state. The rotary wheel in this shape can only permit the locking mechanism to complete the locking action, and the springs in the locking mechanism are always in the compressed state and have no opportunities to return. The springs will inevitably be damaged after working for a long time.

For the shape of the rotary wheel in the invention, with the arrangement of the initial state region, the first ascending region, the rapid descending region, the locking state region, the ascending region and the releasing region, the locking mechanism can enter the working state from the initial state smoothly and accurately, and then return to the initial state after the work is completed. When the locking mechanism is in the initial state, the springs in the locking mechanism are in a natural uncompressed and unstretched state. When the locking mechanism enters the first ascending state, the rapid descending state, the locking state, the second ascending state and the releasing state, it is in the working state. The locking mechanism completes the locking of the reagent disc by completing the shift to the first ascending state, the rapid descending state and the locking state, and completes the releasing of the reagent disc by completing the shift to the second ascending state and the releasing state.

Further, the combined rotary wheel has a shape of an ellipse including a major axis and a minor axis, the first ascending region, the rapid descending region, the ascending region and the releasing region are close to the major axis, and the initial state region and the locking state region are close to the minor axis.

Further, the first rotary wheel and the second rotary wheel are installed on a support layer together. The first rotary wheel is on an outer side, and the second rotary wheel is located between the first rotary wheel and the support layer. The first rotary wheel and the second rotary wheel are fixed in position relative to each other and are capable of rotating synchronously.

Further, the first rotary wheel and the second rotary wheel are respectively in direct or indirect contact with the inner rod and the outer rod.

The rotary wheel provided by the invention can be either in direct contact or indirect contact with the locking mechanism to complete locking and releasing of the reagent disc, but direct contact is preferred, and in this way, the actions can be completed more accurately.

Further, a lower end of the outer rod is provided with an end cover, and a lower end of the inner rod is provided with a contact end. During an operation process of the locking mechanism, the contact end is extendable out of the end cover or retractable into the end cover. During the rotation process of the combined rotary wheel, the contact end is in direct contact with a surface of the first rotary wheel, and the end cover is in direct contact with a surface of the second rotary wheel.

The outer rod and the end cover at the lower end of the outer rod both have a hollow structure, the inner rod is located in the hollow structure of the outer rod, and the contact end of the inner rod is extendable out of the end cover through the hollow part.

The process of locking or releasing the reagent disc by the locking mechanism needs to be implemented through the cooperative movements of the outer rod and the inner rod. For example, sometimes, the inner rod needs to move faster, and the outer rod needs to move slower; or sometimes, the inner rod and the outer rod need to move at the same time. The cooperative movements of the outer rod and the inner rod are respectively implemented through the cooperative movements of the end cover and the contact end, and the movements of the end cover and the contact end are respectively implemented through direct contact with the second rotary wheel and the first rotary wheel.

Further, when the locking mechanism is in the initial state, the initial state region of the combined rotary wheel cooperates with the locking mechanism, the first rotary wheel edge in the initial state region is lower than the second rotary wheel edge, the contact end is in contact with the first rotary wheel edge, and the end cover is in contact with the second rotary wheel edge.

When the locking mechanism is in the first ascending state, the first ascending region of the combined rotary wheel cooperates with the locking mechanism, the first rotary wheel edge in the first ascending region gradually ascends to be flush with the second rotary wheel edge, the contact end is in contact with the first rotary wheel edge, and the end cover is in contact with the second rotary wheel edge.

When the locking mechanism is in the rapid descending state, the rapid descending region of the combined rotary wheel cooperates with the locking mechanism, the first rotary wheel edge in the rapid descending region descends rapidly, the end cover is in contact with the second rotary wheel edge, and the contact end is unable to contact the first rotary wheel edge.

When the locking mechanism is in the locking state, the locking state region of the combined rotary wheel cooperates with the locking mechanism, the first rotary wheel edge in the locking state region ascends and is flush with the second rotary wheel edge, the end cover is unable to contact the second rotary wheel edge, and the contact end is unable to contact the first rotary wheel edge.

When the locking mechanism is in the second ascending state, the ascending region of the combined rotary wheel cooperates with the locking mechanism, the first rotary wheel edge in the ascending region gradually ascends to be close to the second rotary wheel edge, the contact end is in contact with the first rotary wheel edge, and the end cover is in contact with the second rotary wheel edge.

When the locking mechanism is in the releasing state, the releasing region of the combined rotary wheel cooperates with the locking mechanism, the first rotary wheel edge in the releasing region is kept close to the second rotary wheel edge, the contact end is in contact with the first rotary wheel edge, and the end cover is in contact with the second rotary wheel edge.

Further, the locking mechanism further includes steel balls, and the inner rod is provided with steel ball grooves. The steel balls are capable of entering the steel ball grooves or sliding out of the steel ball grooves during an up-and-down movement process of the inner rod.

When the locking mechanism extends into the reagent disc and the steel balls slide out of the steel ball grooves, the steel balls can clamp, fix and lock the reagent disc. When the steel balls return to the steel ball grooves, the reagent disc is unlocked and released. That is, the steel balls have a state of sliding out and a state of being accommodated. When the steel balls slide out, the reagent disc can be clamped. When the steel balls are accommodated, the reagent disc is released.

In the reagent disc control device, the locking mechanism is in a vertical state. When the upper end of the inner rod is flush with the upper end of the outer rod or the inner rod is slightly lower than the outer rod (for example, with a height difference of about 1 mm), the steel ball grooves in the inner rod are just at the positions where the steel balls are located, and the steel balls can slide and be accommodated in the steel ball grooves. When the inner rod moves down such that the upper end of the inner rod is lower than the outer rod, the steel ball grooves in the inner rod move down and leave the positions where the steel balls are located, and the steel balls are forced to slide out of the steel ball grooves. Since other positions of the inner rod are all larger in size than the positions where the steel ball grooves are located, the steel balls are pressed outward to protrude so as to clamp the reagent disc.

That is, the height of the steel balls is determined by the outer rod, and whether the inner rod moves up or down relative to the outer rod, the height of the positions where the steel balls are located is unchanged relative to the outer rod. When the inner rod is at a higher position in the outer rod (for example, the upper end of the inner rod is flush with the upper end of the outer rod or the inner rod is slightly lower than the outer rod), the steel balls are accommodated in the steel ball grooves. When the inner rod descends and the inner rod is at a lower position relative to the outer rod, the steel balls are pressed out. If the steel balls that are pressed out are located in a mounting hole of the reagent disc, the steel balls will be clamped so as to lock the reagent disc.

Further, the outer rod is provided with a first spring configured to control an up-and-down movement distance of the outer rod. The inner rod is provided with a second spring configured to control an up-and-down movement distance of the inner rod. The contact end is provided with a flange configured to limit a distance that the contact end extends out of the end cover. An upper end of the second spring is connected to an inner wall of the outer rod, and a lower end is connected to the flange.

Further, the outer rod is provided with a first spring configured to control an up-and-down movement distance of the outer rod. The inner rod is provided with a second spring configured to control an up-and-down movement distance of the inner rod.

In some implementations, the first spring has larger elasticity. The locking of the reagent disc requires the first spring to provide a downward pulling force, so the first spring needs to have enough elastic force to pull down the locking mechanism to maintain the locking of the reagent disc.

Further, the contact end is provided with a flange configured to limit a distance that the contact end extends out of the end cover. An upper end of the second spring is connected to an inner wall of the outer rod, and a lower end is connected to the flange.

The diameter of the contact end increases at the flange position. When the inner rod moves downward, the contact end extends downward out of the outer rod. When the contact end moves down to the flange position, the contact end is blocked since the flange is larger in size than the hollow position of the end cover, thereby preventing the inner rod from continuing moving downward. Therefore, the distance from the contact end to the flange position is the longest distance that the inner rod can extend out of the outer rod when the locking mechanism is in the natural vertical state.

The inner wall of the outer rod forms a platform at the contact position of the second spring, and the second spring is connected and fixed with the platform.

Further, the reagent disc control device further includes a centrifugal driving component, configured to drive the reagent disc to rotate centrifugally. The centrifugal driving component is hollow, and the locking mechanism runs through the centrifugal driving component and contacts the reagent disc. An upper end of the first spring is connected to a bottom surface of the centrifugal driving component, and a lower end is connected to the end cover.

The hollow part of the centrifugal driving component provides a space for the locking mechanism to move up and down and also helps the locking mechanism to stay in the vertical state without tilting left and right. A lower bottom surface of the centrifugal driving component provides a support for the first spring.

Under the cooperative action of the inner rod, the outer rod, the steel balls, the first spring and the second spring of the reagent disc control device, the locking mechanism switches among the initial state, the first ascending state, the rapid descending state, the locking state, the second ascending state and the releasing state to lock and release the reagent disc, and needs to stay in the vertical state with the assistance of the centrifugal driving component.

In some implementations, the rotary driving mechanism further includes two photoelectric sensors. The two photoelectric sensors are respectively located on a left side and a right side of the support layer and configured to sense whether the combined rotary wheel is in the initial state. When the combined rotary wheel is in the initial state region, the notch in the combined rotary wheel can be sensed by the photoelectric sensor on the left side, but not by the photoelectric sensor on the right side. When the combined rotary wheel is in the locking state region, the notch in the combined rotary wheel can be sensed by the photoelectric sensor on the right side, but not by the photoelectric sensor on the left side. **In** this way, the position of the combined rotary wheel can be indicated correctly. Of course, the left side and the right side here can be interchanged as needed.

**In** some implementations, the combined rotary wheel provided by the invention is made of a wear-resistant-material (such as nylon PA66 or nylon PA6), and it can ensure the control accuracy and can still complete the locking and releasing of the reagent disc after working for more than 240000 times.

**In** another aspect, the invention provides a method of controlling a reagent disc, including the following steps:
(1) placing a reagent disc into a reagent disc control device;
(2) starting a rotary driving mechanism, and driving a locking mechanism into a locking state through rotation of a combined rotary wheel in the rotary driving mechanism such that the reagent disc is locked;
(3) performing centrifugal rotation and detection on the reagent disc; and
(4) allowing the combined rotary wheel to continue to rotate, driving an inner rod of the locking mechanism to gradually move up close to an outer rod, and then allowing the inner rod and the outer rod to leave the reagent disc together while keeping relative positions unchanged such that the reagent disc is released.

Further, in step (4), after the reagent disc is released, the combined rotary wheel continues to rotate, and the locking mechanism returns to an initial state. **In** step (1), the locking mechanism is in the initial state. When the locking mechanism is in the initial state, an initial state region of the combined rotary wheel cooperates with the locking mechanism. Springs in the locking mechanism are not deformed, and the inner rod extends out of the outer rod from a lower side.

Further, in step (2), the rotary driving mechanism is started, the inner rod and the outer rod of the locking mechanism are both pushed to highest positions through the rotation of the combined rotary wheel in the rotary driving mechanism, then the inner rod descends rapidly, steel balls of the locking mechanism are popped out, and the reagent disc is locked.

**In** still another aspect, the invention provides a reagent disc. The reagent disc includes a reagent packaging mechanism. The reagent packaging mechanism includes a positioned end and a suspended end. The positioned end is detachably positioned and fixed in the reagent disc, and the suspended end is in a suspended state, so that the reagent packaging mechanism can keep a certain distance from a bottom plate of the reagent disc.

The reagent packaging mechanism in the existing reagent disc must move up for a certain distance during the opening process, which is not easy to control and affects the stability of opening.

In the reagent disc provided by the invention, the reagent packaging mechanism is positioned with a small distance suspended in advance, so that it does not need to move up and down during the opening process, thereby improving the stability and reliability of opening the reagent packaging mechanism. Since this small distance suspended only needs to ensure the liquid to smoothly flow out of the reagent packaging mechanism, the overall height of the reagent disc is not affected.

The "detachably positioned and fixed" means that the reagent packaging mechanism is not completely fixed with the inner wall of the reagent disc, but movably connected and fixed by sleeving positioning holes on positioning pins. If the reagent packaging mechanism is pushed directly from the lower side of the positioned end of the reagent packaging mechanism, the reagent packaging mechanism can still move up until it is blocked by a push plate of the reagent disc.

It can be understood that if both of the two ends of the reagent packaging mechanism are detachably positioned and fixed with two positions inside the reagent disc, the overall reagent packaging mechanism can still keep a certain distance from the bottom plate of the reagent disc and in a suspended state. However, this design will make the preparation process more complicated and the cost increased.

With only one end detachably positioned and fixed and the other end suspended, the reagent packaging mechanism is simpler to make and lower in cost, and moreover, it is more convenient to tear the sealing film open smoothly. Since the locking mechanism does not push the reagent packaging mechanism directly from the lower side of the positioned end, but pushes up the sealing film from between the positioned end and the suspended end, the positioned end is subjected to a biasing force, which cannot move the reagent packaging mechanism but can only push the sealing film up. Moreover, at the suspended end, the sealing film is only subjected to a lateral pulling force and not subjected to forces in other directions, so the sealing film can be torn open more easily.

Further, the suspended end is provided with a liquid outlet, and the liquid outlet is covered with a sealing film. A tail end of an extended part of the sealing film and the positioned end of the reagent packaging mechanism are positioned inside the reagent disc together.

Theoretically, the liquid outlet may be provided either at the suspended end or at the positioned end, for the following two reasons:
First, considering the convenience of preparation, the liquid outlet is preferably provided at the suspended end. Since the extended part of the sealing film also needs to be fixed, if the liquid outlet is provided at the positioned end, then the extended part of the sealing film additionally needs a special process (e.g., hot melting) before it is fixed to the suspended end, which undoubtedly increases the cost; and if the liquid outlet is provided at the suspended end, it is only required to position the tail end of the extended part of the sealing film and the positioned end to the reagent disc together, and there is no need to add an additional preparation process. With this ingenious design, the reagent packaging mechanism is simpler in structure and lower in cost.

Second, considering the ease of tearing the sealing film open, the liquid outlet is preferably provided at the suspended end. Since the suspended end only needs to be provided with the liquid outlet and does not need to be provided with positioning holes required for positioning, the liquid outlet can be provided as far away from the center of circle of the reagent packaging mechanism as possible, that is, the sealing position of the sealing film can be as close to the outer edge of the reagent packaging mechanism as possible. In this way, the sealing film can be subjected to a larger pulling force, so that it is easier to quickly and accurately tear the sealing film open, thereby ensuring zero error during the opening process of the reagent packaging mechanism. If the liquid outlet is provided at the positioned end, then the positioned end needs to be provided with both positioning holes and the liquid outlet, and the liquid outlet has to be provided on the inner side of the positioning hole (i.e., the liquid outlet has to be closer to the center of the ring shape than the positioning holes, otherwise it is required to bypass the positioning holes when opening the sealing film, which makes it difficult to open the sealing film), so that the locking mechanism needs a larger force to tear the sealing film open, thereby affecting the reliability of opening the reagent packaging mechanism. Therefore, the liquid outlet is preferably provided at the suspended end.

Further, the positioned end of the reagent packaging mechanism and an inside of the reagent disc are positioned through cooperation between positioning pins and positioning holes. When the inside of the reagent disc is provided with the protruding positioning pins, then the positioned end of the reagent packaging mechanism is provided with the positioning holes matched with the positioning pins. When the positioned end of the reagent packaging mechanism is provided with the protruding positioning pins, then the inside of the reagent disc is provided with the positioning holes matched with the positioning pins.

The positioning through the cooperation between the positioning pins and the positioning holes is simple in structure and preparation process. The positioning holes need to be matched with positioning pins in size. The positioning holes are directly sleeved on the positioning pins, which can perform a good positioning function.

The fixation by sleeving the positioning holes on the positioning pins seems not effective, but actually, the reagent packaging mechanism cannot be moved during the process of pushing the sealing film by the locking mechanism, that is to say, the reagent packaging mechanism will not move up and down. Since the locking mechanism pushes the sealing film up from between the positioned end and the suspended end, during this process, the positioning pins and the positioning holes are directly subjected to a force in the inclination direction. Since the positioning pins are closely matched with the positioning holes in size, the force in this direction makes the positioning pins and the positioning holes clamped more tightly such that the reagent packaging mechanism cannot be moved.

Further, the inside of the reagent disc is provided with the protruding positioning pins. The positioned end of the reagent packaging mechanism is provided with first positioning holes, and the tail end of the extended part of the sealing film is provided with second positioning holes. The positioned end of the reagent packaging mechanism and the tail end of the extended part of the sealing film are positioned through cooperation between the first positioning holes, the second positioning holes and the positioning pins inside the reagent disc.

The protruding positioning pins may be arranged either inside the reagent disc or at the positioned end of the reagent packaging mechanism, preferably inside the reagent disc. The protruding positioning pins are more complicated in structure than the positioning holes and the reagent packaging mechanism is a consumable that is disposable and easy to replace, so it is more economical and convenient to provide the positioning holes with simpler structure in the reagent packaging mechanism. Moreover, the reagent packaging mechanism is smaller in size and the reagent disc is larger in volume and weight, arranging the protruding positioning pins inside the reagent disc will make the positioning effect more stable and reliable.

**In** the prior art, in order to fix the extended end of the sealing film with one end of the reagent packaging mechanism by hot melting, it is required to add a hot-melt adhesive, which increases the thickness of this part while only the reagent packaging mechanism and the extended end of the sealing film can be fixed and they cannot be fixed with the reagent disc. **In** the sealing film provided by the invention, the extended end can be positioned and fixed with both the reagent packaging mechanism and the reagent disc simply by providing the positioning holes, which is simpler in structure and does not need any adhesive, thereby avoiding increasing the additional thickness. Moreover, the positioning effect is better.

Further, a number of the positioning pins is at least two. A number of the first positioning holes and the second positioning holes is at least two and is matched with the number of the positioning pins. The first positioning holes and the second positioning holes are sequentially sleeved on the positioning pins from top to bottom.

An increase in the number of the positioning pins can improve the positioning effect and make the position of the reagent packaging mechanism more steady, but the increase in the number of the positioning pins and the positioning holes will inevitably increase the complexity in preparation, so the number of the positioning pins is preferably two.

When the reagent packaging mechanism is to be installed into the reagent disc, the two second positioning holes in the sealing film of the reagent packaging mechanism and the two first positioning holes in a main body of the reagent packaging mechanism are sequentially sleeved on the two positioning pins on a bottom plate of a base plate of the reagent disc. Then, the base plate of the reagent disc is fixed to the cover plate by gluing or bonding. A bottom of the sealing film of the reagent packaging mechanism forms an openable pull ring, through which the sealing film can be pulled open to release the reagent therein with the cooperation of the locking mechanism.

Further, the reagent packaging mechanism is ring-shaped and is provided with a through hole in a middle. The sealing film includes a sealing part and the extended part. The sealing part is configured to seal the liquid outlet, and the extended part is connected to the sealing part. After being folded, the extended part extends across the through hole and is fixed by the positioning pins.

In some implementations, the reagent packaging mechanism is located in a mounting hole of the reagent disc. When the locking mechanism extends into the mounting hole of the reagent disc, it also extends into the through hole of the reagent packaging mechanism. Since the sealing film extends across the through hole after being folded reversely, when the locking mechanism extends into the through hole, the sealing film will be pushed up, so that the reagent packaging mechanism is opened.

Further, the positioned end of the reagent packaging mechanism is recessed downward to form a notch in the ring shape.

The positioned end of the reagent packaging mechanism is recessed downward, so that the positioning holes can be sleeved on the positioning pins more conveniently, and the mass of this part of the reagent packaging mechanism can be reduced, which is helpful to balance the biasing force, improves the fixation effect of the reagent packaging mechanism and facilitates opening of the sealing film.

Further, a lateral size of the tail end of the extended part is greater than a lateral size of other positions of the sealing film.

Further, the notch in the reagent packaging mechanism is fan-shaped, and the tail end of the extended part is also fan-shaped to match the notch.

Further, the liquid outlet is located at a bottom of the reagent packaging mechanism. The reagent disc includes a cover plate and a base plate, and the reagent packaging mechanism is located between the cover plate and the base plate.

Further, the reagent packaging mechanism is located above the mounting hole of the reagent disc, and the through hole of the reagent packaging mechanism is in communication with the mounting hole. When the locking mechanism enters the through hole of the reagent packaging mechanism through the mounting hole, the sealing film can be torn open, and the reagent disc can be locked.

The invention has the following beneficial effects:
(1) By improving the structure of the combined rotary wheel and arranging the reasonable height difference and change process in the unlocking region of the rotary wheel, the inner rod and the outer rod are more steady and smoother and will not shake during the unlocking process, so that the reagent disc will not vibrate, thereby ensuring the accuracy of fluorescence reading in the reagent disc.
(2) In the combined rotary wheel, the reasonable height difference and change process are set for the first rotary wheel edge and the second rotary wheel edge according to the task to be completed in each region, so that the inner rod and the outer rod can be kept stable without shaking during the whole movement process, which makes the fluorescence reading in the reagent disc more accurate.
(3) The combined rotary wheel can be in direct contact with the locking mechanism, and the locking mechanism can be stably driven to move without shaking without adding a gasket or partition for transmitting the movement of the combined rotary wheel. In this way, the reagent disc control device is simpler in structure and higher in response speed, and can complete more precise and complicated actions.
(4) The locking mechanism can switch between the initial state and the working state flexibly. The locking mechanism is allowed to return to the initial state when it is not working, and to enter the working state when it needs to work. The springs in the locking mechanism do not need to be in the compressed state for a long time, and can be reused many times, thereby prolonging the service life and lowering the cost.
(5) Even when the locking mechanism is in the working state, it can provide as many opportunities as possible for the springs to recover from deformation, thereby reducing the adverse effects caused by long-time compression.
(6) By improving the structure of the reagent packaging mechanism and making one end of the reagent packaging mechanism in the reagent disc positioned and fixed and the other end suspended, the reagent packaging mechanism can keep a certain distance from the bottom plate of the reagent disc, so that the reagent packaging mechanism does not need to move up and down in the opening process, thereby improving the stability.
(7) The reagent packaging mechanism with one end positioned and fixed and the other end suspended is simpler in structure, convenient for the fixation of the sealing film and lower in cost, and is helpful to improve the opening effect of the sealing film and ensure zero error during the opening process of the reagent packaging mechanism. Moreover, the reagent in the reagent packaging mechanism can be fully used, thereby improving the accuracy of the reagent disc in the detection process.

### BRIEF DESCRIPTION OF THE DRAWINGS

FIG. 1 is a schematic structural view of a combined rotary wheel in an existing reagent disc control device;
FIG. 2 is a schematic structural view of a combined rotary wheel in an improved reagent disc control device of the invention;
FIG. 3 is an overall structural view of the reagent disc control device;
FIG. 4 is an exploded view of the reagent disc control device;
FIG. 5 is a sectional view of the reagent disc control device;
FIG. 6 illustrates schematic views showing a movement process of a locking region of the combined rotary wheel;
FIG. 7 is a schematic structural view of a reagent disc;
FIG. 8 is a schematic structural view of a locking mechanism;
FIG. 9 is a sectional view of the locking mechanism;
FIG. 10 is a schematic region partitioning view of a rotary driving mechanism;
FIG. 11 is a schematic structural view of the rotary driving mechanism;
FIG. 12 illustrates schematic views showing different state switching processes of the reagent disc control device;
FIG. 13 is an exploded view of the reagent disc;
FIG. 14 is a schematic structural view (top view) of a reagent packaging mechanism;
FIG. 15 illustrates schematic structural views before and after the reagent packaging mechanism is opened, where the left view is the schematic structural view before the reagent packaging mechanism is opened, and the right view is the schematic structural view after the reagent packaging mechanism is opened;
FIG. 16 illustrates schematic views showing an opening process of the reagent packaging mechanism; and
FIG. 17 is a diagram showing forces applied to a sealing film during the opening process.

### DETAILED DESCRIPTION OF THE INVENTION

### Reagent disc

A reagent disc is an experimental instrument used in biochemical analysis laboratories, and is used in conjunction with a biochemical analyzer based on a highly integrated sample processing system based on microfluidic technology. A reagent disc includes assemblies with integrated optical and mechanical functions, and participates in every stage of analysis of samples such as blood in conjunction with instruments. By controlling the fluid in the microchannel network, the analysis process is automatically completed, and a series of operations such as sampling, separation, dilution, reaction and detection of samples are completed in a small reagent disc.

A reagent disc usually includes a main body, a diaphragm, a light blocking ring and a reagent packaging mechanism. The main body is injection-molded from acrylic, and has a cavity in the middle for accommodating the reagent packaging mechanism. An upper side of the main body is sealed with the diaphragm such that the reagent packaging mechanism is sealed in the reagent disc. The light blocking ring is attached to the diaphragm. The main body integrates a sample application pool, a sample quantification pool, a blood cell collection pool, a sample waste liquid pool, a diluent quantification pool, a mixing pool, distribution channels, a colorimetric hole, etc. The sample quantification pool, the diluent mixing pool and the mixing pool are communicated through siphon valves. The distribution channels of the mixing pool and the colorimetric hole are communicated through a siphon valve. The sample quantification pool also has a function of plasma separation. When the reagent disc rotates at a high speed, the plasma is retained in the sample quantification pool, and the blood cells are collected by the blood cell collection pool with a larger radius. The cavity in the middle of the reagent disc is further provided with a mounting hole. Through the mounting hole, the reagent disc can be locked by a locking mechanism. A lotus-shaped closing hole is arranged below the mounting hole. Each petal of the lotus can guide steel balls in the locking apparatus to enter and clamp the steel balls, thereby locking the reagent disc. The mounting hole is located at the center of circle of the reagent disc, so that the reagent disc can rotate around the center of circle after being locked.

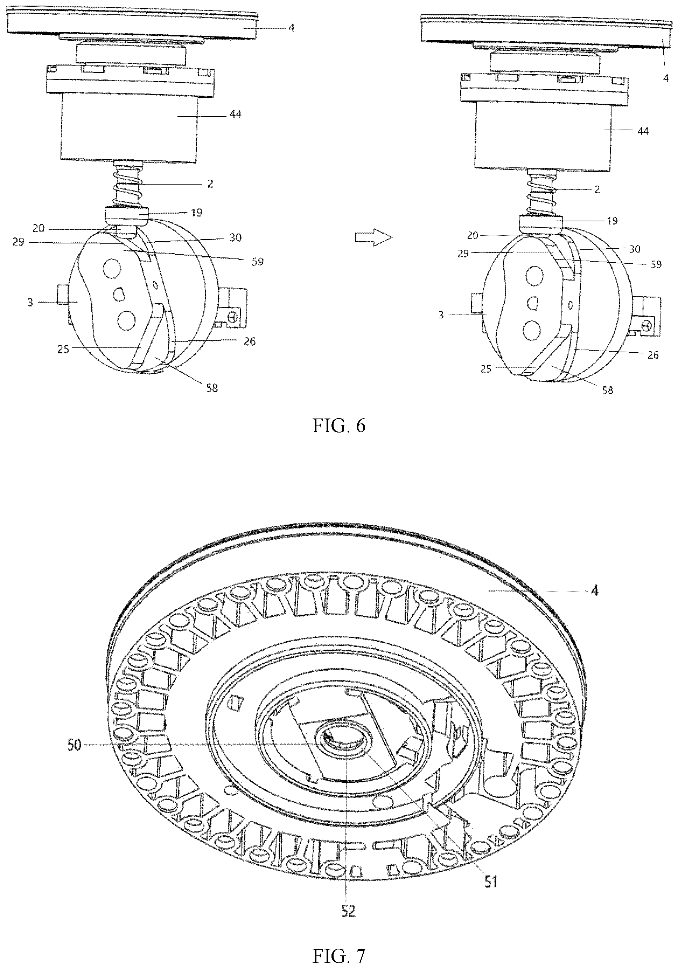

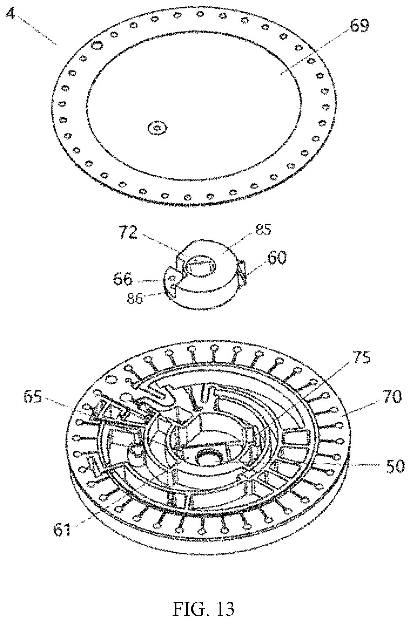

The structure of a reagent disc in the invention is shown in FIG. 7 and FIG. 13. The reagent disc 4 includes a cover plate 69 (diaphragm) and a base plate 70 (main body). A reagent packaging mechanism 85 is located between the cover plate 69 and the base plate 70 and above a mounting hole 50 at a center of the reagent disc 4, so that the reagent packaging mechanism 85 can be opened by the way in the process of locking the reagent disc 4.

### Reagent packaging mechanism

A reagent used to treat a sample needs to be pre-packaged in the reagent packaging mechanism of the reagent disc, and the biochemical analyzer needs to open the reagent packaging mechanism at a specific time during the sample analysis process, so that the reagent can flow into the reagent disc and be mixed with the sample for centrifugation. Therefore, the biochemical analyzer also needs to lock and fix the reagent disc through the locking mechanism and drive the reagent disc to rotate to complete the centrifugation.

The reagent packaging mechanism is pre-filled with a diluent or a treatment liquid and usually sealed by a sealing film. Before the reagent disc is centrifuged, it is required to open the sealing film of the reagent packaging mechanism successfully. The sealing film may be opened by puncturing or pulling.

After the reagent disc is put into the biochemical analyzer, the sealing film of the reagent packaging mechanism may be opened by the way during the upward movement of the locking mechanism. The reagent in the reagent packaging mechanism is conveyed to a target area, such as the diluent quantification pool, under the centrifugal action of the reagent disc rotating at high speed, and mixed with the sample later.

Different from the reagent packaging mechanism in the existing reagent disc, the reagent packaging mechanism provided by the invention has a fixed structure. As shown in FIG. 13, the reagent packaging mechanism 85 includes a positioned end 86 and a suspended end 60. The positioned end 86 is detachably positioned and fixed in the reagent disc 4, and the suspended end 60 is in a suspended state, so that the reagent packaging mechanism 85 can keep a certain distance from a bottom plate 61 of the reagent disc 4. The reagent packaging mechanism 85 in the existing reagent disc 4 must move up for a certain distance during the opening process, which is not easy to control and affects the stability of opening. **In** the reagent disc 4 provided by this embodiment, the reagent packaging mechanism 85 is positioned with a small distance suspended in advance, so that it does not needs to move up and down during the opening process, thereby improving the stability and reliability of opening the reagent packaging mechanism 85. Since this small distance suspended only needs to ensure the liquid to smoothly flow out of the reagent packaging mechanism 85, the overall height of the reagent disc 4 is not affected.

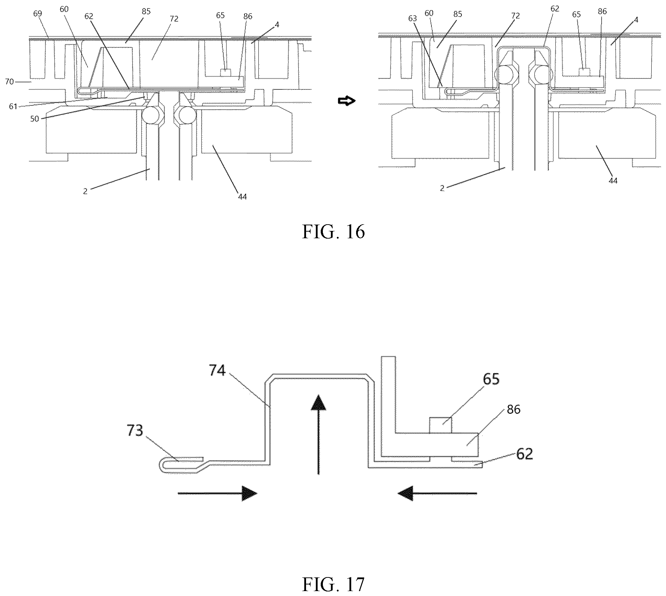

The "detachably positioned and fixed" means that the reagent packaging mechanism 85 is not completely fixed with the inner wall of the reagent disc 4, but movably connected and fixed by sleeving positioning holes on positioning pins. For example, as shown in FIG. 13, an inside of the reagent disc 4 is provided with positioning pins 65, the positioned end 86 of the reagent packaging mechanism 85 is provided with first positioning holes 67, and a tail end 64 of an extended part of the sealing film 62 for sealing the reagent packaging mechanism 85 is provided with second positioning holes 68. This preparation process is very simple. With this process, the reagent packaging mechanism 85 can be fixed with the sealing film 62 simply by sequentially sleeving the second positioning holes 68 and the first positioning holes 67 on the positioning pins 65. Moreover, this process is convenient for replacement and has good fixation effect, and the reagent packaging mechanism 85 does not move during the whole process. It can be understood that if both of the two ends of the reagent packaging mechanism 85 are positioned ends and are detachably positioned and fixed with two positions inside the reagent disc 4, the overall reagent packaging mechanism 85 can still keep a certain distance from the bottom plate 61 of the reagent disc 4 and in a suspended state. However, this design will make the preparation process more complicated and the cost increased. With only one end detachably positioned and fixed and the other end suspended, the reagent packaging mechanism is simpler to make and lower in cost. Moreover, the position of the reagent packaging mechanism 85 in the reagent disc 4 can be made more stable, and it is more convenient to tear the sealing film 62 open smoothly. Since the locking mechanism 2 does not push the reagent packaging mechanism 85 directly from the lower side of the positioned end 86 (FIG. 17), but pushes up the sealing film 62 from between the positioned end 86 and the suspended end 60, the positioned end 86 is subjected to a biasing force, as shown in FIG. 17, which cannot move the reagent packaging mechanism 85, but can only increase the friction between the positioning holes 66 and the positioning pins 65 and make them clamped more tightly so as to push the sealing film 62 up. Moreover, the reagent packaging mechanism 85 is fixed, and at the suspended end 60, the sealing film 62 is only subjected to a lateral pulling force and not subjected to forces in other directions, so the sealing film 62 can be torn open more easily.

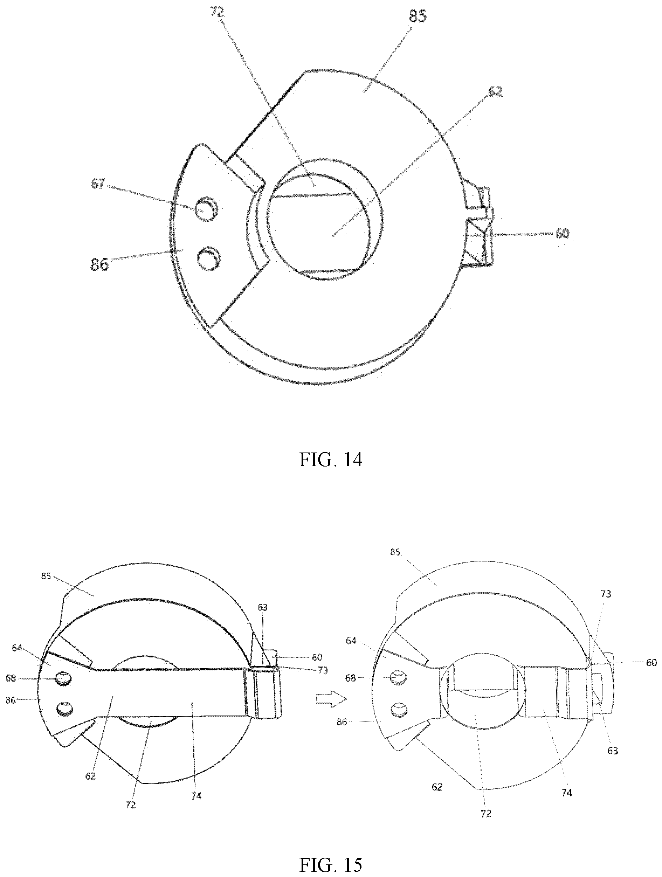

As shown in FIG. 15, the suspended end 60 of the reagent packaging mechanism 85 is provided with a liquid outlet 63, and the liquid outlet 63 is covered with the sealing film 62. A tail end 64 of an extended part of the sealing film 62 and the positioned end 86 of the reagent packaging mechanism 85 are positioned inside the reagent disc 4 together. Theoretically, the liquid outlet 63 may be provided either at the suspended end 60 or at the positioned end 86. **In** order to make the reagent packaging mechanism 85 simpler in structure and lower in cost and improve the reliability of opening the reagent packaging mechanism 85, the liquid outlet 63 is preferably provided at the suspended end 60, for the following two reasons: First, considering the convenience of preparation, the liquid outlet 63 is preferably provided at the suspended end 60. Since the extended part 74 of the sealing film 62 also needs to be fixed, if the liquid outlet 63 is provided at the positioned end 86, then the extended part 64 of the sealing film 62 additionally needs a special process (e.g., hot melting) before it is fixed to the suspended end 60, which undoubtedly increases the cost; and if the liquid outlet 63 is provided at the suspended end 60, it is only required to position the tail end 64 of the extended part of the sealing film 62 and the positioned end 86 to the reagent disc 4 together, and there is no need to add an additional preparation process. With this ingenious design, the reagent packaging mechanism 85 is simpler in structure and lower in cost. Second, considering the ease of tearing the sealing film 62 open, the liquid outlet 63 is preferably provided at the suspended end 60. Since the suspended end 60 only needs to be provided with the liquid outlet 63 and does not need to be provided with positioning holes required for positioning, the liquid outlet 63 can be provided as far away from the center of circle of the reagent packaging mechanism 85 as possible, that is, the sealing position of the sealing film can be as close to the outer edge of the reagent packaging mechanism 85 as possible. In this way, the sealing film can be subjected to a larger pulling force, so that it is easier to quickly and accurately tear the sealing film 62 open, thereby ensuring zero error during the opening process of the reagent packaging mechanism 85. If the liquid outlet 63 is provided at the positioned end 86, then the positioned end 86 needs to be provided with both the positioning holes 66 and the liquid outlet 63, and the liquid outlet 63 has to be provided on the inner side of the positioning hole 66 (i.e., the liquid outlet 63 has to be closer to the center of the ring shape than the positioning holes 66, otherwise it is required to bypass the positioning holes 66 when opening the sealing film 62, which makes it difficult to open the sealing film 62), so that the locking mechanism 2 needs a larger force to tear the sealing film 62 open, thereby affecting the reliability of opening the reagent packaging mechanism 85. Therefore, the liquid outlet 63 is preferably provided at the suspended end 60.

As shown in FIG. 15, a position of the liquid outlet 63 corresponds to that of a liquid inlet 75 of the reagent disc 4. Since the position of the reagent packaging mechanism 85 is stable and fixed, the relative positions of the liquid outlet 63 of the reagent packaging mechanism and the liquid inlet 75 of the reagent disc are also stable and fixed, thereby preventing liquid leakage or liquid residues and improving the accuracy of the detection result of the reagent disc 4.

In some implementations, the positioned end 86 of the reagent packaging mechanism 85 and the inside of the reagent disc 4 are positioned through cooperation between the positioning pins 65 and positioning holes 66. The positioning pins 65 may be arranged in the reagent disc 4 or designed at the positioned end 86 of the reagent packaging mechanism 85, both of which can realize positioning. When the inside of the reagent disc 4 is provided with the protruding positioning pins 65, then the positioned end 86 of the reagent packaging mechanism 85 is provided with the positioning holes 66 matched with the positioning pins. When the positioned end 86 of the reagent packaging mechanism 85 is provided with the protruding positioning pins 65, then the inside of the reagent disc 4 is provided with the positioning holes 66 matched with the positioning pins. The positioning through the cooperation between the positioning pins 65 and the positioning holes 66 is simple in structure and preparation process. The positioning holes 66 need to be matched with positioning pins 65 in size. The positioning holes 66 are directly sleeved on the positioning pins 65, which can perform a good positioning function.

Preferably, the inside of the reagent disc 4 is provided with the protruding positioning pins 65. The positioned end 86 of the reagent packaging mechanism 85 is provided with first positioning holes 67, and the tail end 64 of the extended part of the sealing film 62 is provided with second positioning holes 68. The positioned end 86 of the reagent packaging mechanism 85 and the tail end 64 of the extended part of the sealing film 62 are positioned through cooperation between the first positioning holes 67, the second positioning holes 68 and the positioning pins 65 inside the reagent disc 4. The protruding positioning pins 65 are more complicated in structure than the positioning holes 66 and the reagent packaging mechanism 85 is a consumable that is disposable and easy to replace, so it is more economical and convenient to provide the positioning holes 66 with simpler structure in the reagent packaging mechanism. Moreover, the reagent packaging mechanism 85 is smaller in size and the reagent disc 4 is larger in volume and weight, arranging the protruding positioning pins 65 inside the reagent disc 4 will make the positioning effect more stable and reliable. In the prior art, in order to fix the extended end of the sealing film 65 with one end of the reagent packaging mechanism 85 by hot melting, it is required to add a hot-melt adhesive, which increases the thickness of this part while only the reagent packaging mechanism 85 and the extended end 64 of the sealing film can be fixed and they cannot be fixed with the reagent disc 4. In the sealing film provided by the invention, the extended end 64 can be positioned and fixed with both the reagent packaging mechanism 85 and the reagent disc 4 simply by providing the positioning holes 66, which is simpler in structure and does not need any adhesive, thereby avoiding increasing the additional thickness. Moreover, the positioning effect is better.

The fixation by sleeving the positioning holes 65 on the positioning pins 66 seems not effective, but actually, the reagent packaging mechanism 85 cannot be moved during the process of pushing the sealing film 62 by the locking mechanism 2, that is to say, the reagent packaging mechanism 85 will not move up and down. As shown in FIG. 17, since the locking mechanism 2 pushes up the sealing film 62 from between the positioned end 86 and the suspended end 60, during this process, the positioning pins 65 and the positioning holes 66 are directly subjected to a biasing force. Moreover, the reagent packaging mechanism 85 has one end fixed and the other end suspended, the effect of the biasing force is more significant. Since the positioning pins 65 are closely matched with the positioning holes 66 in size, the biasing force makes the positioning pins 65 and the positioning holes 66 clamped more tightly, and the locking mechanism 2 can only move the soft sealing film 62 and, but cannot move the reagent packaging mechanism 85. Therefore, the reagent packaging mechanism 85 provided by the invention is stable in position, simple in structure and low in cost, and can be removed and replaced easily. The reagent packaging mechanism is very convenient and simple to use, has good fixation effect, and does not move during the whole process. The liquid outlet 63 below the reagent packaging mechanism 85 can be accurately aligned with the liquid inlet 75 of the reagent disc 4, which ensures the reagent to completely enter the reagent disc 4 and avoids reagent residues or leakage, thereby providing a better guarantee for accurate detection.

A number of the positioning pins 65 is at least two. A number of the first positioning holes 67 and the second positioning holes 68 is at least two and is matched with the number of the positioning pins 65. The first positioning holes 67 and the second positioning holes 68 are sequentially sleeved on the positioning pins 65 from top to bottom. The number of the positioning pins 65 is preferably two. When the reagent packaging mechanism 85 is to be installed into the reagent disc 4, the two second positioning holes 68 in the sealing film 62 of the reagent packaging mechanism 85 and the two first positioning holes 67 in the main body of the reagent packaging mechanism 85 are sequentially sleeved on the two positioning pins 65 on the bottom plate 61 of the base plate 70 of the reagent disc. Then, the base plate 70 of the reagent disc 4 is fixed to the cover plate 69 by gluing or bonding. As shown in FIG. 15 and FIG. 16, a bottom 71 of the sealing film 62 forms an openable pull ring, through which the sealing film 62 can be pulled open to release the reagent therein with the cooperation of the locking mechanism 2. The reagent packaging mechanism 85 is ring-shaped and is provided with a through hole 72 in a middle. The sealing film 62 includes a sealing part 73 and the extended part 74. The sealing part 73 is configured to seal the liquid outlet, and the extended part 74 is connected to the sealing part 73. After being folded, the extended part extends across the through hole 72 and is fixed by the positioning pins 65.

In some implementations, the positioning pins 65 are arranged vertically upward, so that the reagent packaging mechanism 85 and the sealing film 62 can be sleeved thereon together. Of course, if the positioning pins 65 are slightly inclined and the inclination direction is opposite to the direction of the biasing force brought by the locking mechanism 2 moving upward, the reagent packaging mechanism 85 can still be fixed. However, compared with the inclined positioning pins 65, the vertical positioning pins 65 are convenient to make and use and have a good stabilizing effect. Therefore, the positioning pins 65 are preferably arranged vertically upward.

As shown in FIG. 13, the reagent packaging mechanism 85 is located in a mounting hole 50 of the reagent disc 4. When the locking mechanism 2 extends into the mounting hole 50 of the reagent disc 4, it also extends into the through hole 72 of the reagent packaging mechanism 85. Since the sealing film 62 extends across the through hole 72 after being folded reversely, when the locking mechanism 2 extends into the through hole 72, the sealing film 62 will be pushed up, so that the reagent packaging mechanism 85 is opened.

As shown in FIG. 14, the positioned end 86 of the reagent packaging mechanism 85 is recessed downward to form a notch in the ring shape. The positioned end 86 is recessed downward, so that the positioning holes can be sleeved on the positioning pins 65 more conveniently, and the mass of this part of the reagent packaging mechanism 85 can be reduced, which is helpful to balance the biasing force, improves the fixation effect of the reagent packaging mechanism 85 and facilitates opening of the sealing film 62. A lateral size of the tail end 64 of the extended part is greater than a lateral size of other positions of the sealing film 62. Preferably, the notch in the reagent packaging mechanism 85 is fan-shaped, and the tail end 64 of the extended part is also fan-shaped to match the notch. The fan-shaped tail end 64 of the extended part improves the fixation effect of the sealing film 62, and the fan-shaped notch also improves the fixation effect of the reagent packaging mechanism 85 through the positioned end 86.

As shown in FIG. 15, the liquid outlet 63 is located at a bottom of the reagent packaging mechanism 85. The reagent disc 4 includes the cover plate 69 and the base plate 70, and the reagent packaging mechanism 85 is located between the cover plate 69 and the base plate 70.

As shown in FIG. 13, the reagent packaging mechanism 85 is located above the mounting hole 50 of the reagent disc 4, and the through hole 72 of the reagent packaging mechanism 85 is in communication with the mounting hole 50. When the locking mechanism 2 enters the through hole 72 of the reagent packaging mechanism 85 through the mounting hole 50, the sealing film 62 can be torn open, and the reagent disc 4 can be locked.

The opening process of the reagent packaging mechanism is shown in FIG. 16. Before the sealing film 62 is torn open (the left view in FIG. 16), a top of the locking mechanism 2 is located below the mounting hole 50 of the reagent disc 4 (this process is equivalent to the locking mechanism in an initial state in Embodiment 1). As the locking mechanism 2 moves upward (the right view in FIG. 16), the extended part 74 of the sealing film 62 of the reagent packaging mechanism 85 is pushed up into the through hole 72 of the reagent packaging mechanism 85, the sealing film 62 of the reagent packaging mechanism is opened, i.e., the liquid outlet 63 of the reagent packaging mechanism is opened, and the reagent starts to flow into the reagent disc 4 (this process is equivalent to the locking mechanism in a first ascending state in Embodiment 1). Then, the locking mechanism 2 enters a rapid descending state and a locking state. During the process of the locking state, a centrifugal driving component 44 starts to rotate and drives the reagent disc 4 to move synchronously. Under the action of the centrifugal force generated by the high-speed rotational movement, the reagent inside the reagent packaging mechanism 85 completely enters the reagent disc 4 through the liquid outlet 63.

### Reagent disc control device

The reagent disc control device refers to a device used in the biochemical analyzer to place, lock and fix, and centrifuge the reagent disc, open the sealed reagent packaging mechanism and release the reagent disc. The reagent disc control device includes a locking mechanism and a rotary driving mechanism. The locking mechanism is located above the rotary driving mechanism and in the hollow centrifugal driving component (i.e., hollow rotating motor). The hollow position of the hollow rotating motor is located on a central axis of the motor and used for keeping the locking mechanism vertical, and the reagent disc may be placed and fixed on an upper surface of the rotating motor. Moreover, after the reagent disc is locked, the rotating motor can be started to make the reagent disc centrifugally rotate.

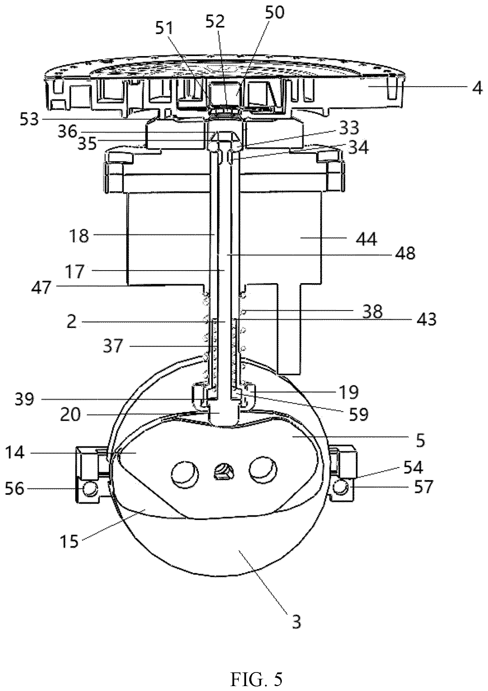

In the invention, as shown in FIG. 5, the locking mechanism 2 in the reagent disc control device 1 is vertically located above the rotary driving mechanism 3, and a lower end of the locking mechanism 2 can be in direct contact with the combined rotary wheel 5. During the rotation process of the rotary wheel, the locking mechanism 2 is driven to complete precise actions, for example, the locking mechanism 2 enters the working state from the initial state, completes locking and releasing of the reagent disc 4 and enters the initial state from the working state.

### Locking mechanism

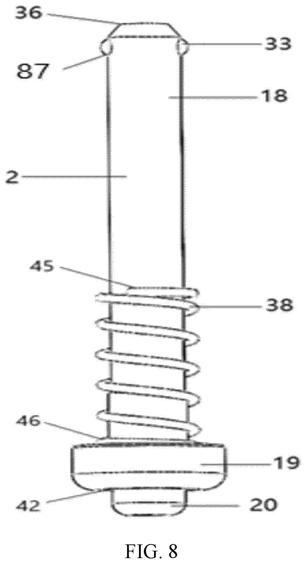

As shown in FIG. 8, the locking mechanism 2 mainly includes an inner rod 17 and an outer rod 18. The outer rod 18 is hollow, and the inner rod 17 is located in the outer rod 18 and slidable up and down in the outer rod 18. An upper end of the outer rod 18 is provided with two hollowed circular holes 87. Two steel balls 33 can respectively protrude out of the two circular holes 87 to increase a lateral size of the outer rod 18 at the position of the circular holes 87, so that the outer rod can be clamped with the mounting hole 50 with a smaller size in the reagent disc 4. An upper end of the inner rod 17 is provided with steel ball grooves 34, and the positions where the steel ball grooves 34 are located are smaller in size than other positions of the inner rod 17. When the inner rod 17 moves upward relative to the outer rod 18 such that the steel ball grooves 34 are at the same height as the positions of the circular holes where the steel balls 33 are located, the steel balls 33 can slide into the steel ball grooves 34 and be accommodated in the steel ball grooves 34 so as not to protrude from the circular holes, so that the lateral size of the outer rod 18 at the circular holes is reduced and is less than the size of the mounting hole in the reagent disc 4. Thereby, the locking mechanism 2 can freely enter and exit the mounting hole 50 of the reagent disc 4 without being clamped. After the locking mechanism 2 enters the mounting hole 50 of the reagent disc 4, the inner rod 17 moves downward relative to the outer rod 18, so the steel ball grooves 34 also move downward in position. When the steel ball grooves are lower in position than the circular holes where the steel balls 33 are located, the steel balls 33 are pressed out of the steel ball grooves 34 so as to protrude out of the circular holes. In this case, if the locking mechanism is to be withdrawn from the mounting hole, it will be clamped, so that the reagent disc is locked firmly.

The lower ends of the inner rod 17 and the outer rod 18 are in direct contact with the combined rotary wheel 5, and the inner rod and the outer rod are driven to move by the rotation of the combined rotary wheel 5. The lower end of the inner rod 17 is further provided with a contact end 20, and a size of the contact end 20 is greater than a lateral size of the inner rod 17. The lower end of the outer rod 18 is provided with a hollow end cover 19, and a size of the end cover 19 is also greater than the lateral size of the outer rod 18. The contact end 20 extends out of the middle of the end cover 19. The contact end 20 and the end cover 19 with increased sizes increase the contact area of direct contact between the inner rod 17 and outer rod 18, and the combined rotary wheel 5, which can improve the stability.

The outer rod 18 is provided with a first spring 38 configured to pull the outer rod 18 and control a downward movement distance of the outer rod 18. When the reagent disc 4 is locked, the reagent disc 4 is pulled down tight by the first spring 38 such that the reagent disc 4 is locked. The inner rod 17 is provided with a second spring 37 configured to pull the inner rod 17 and control a downward movement distance of the inner rod 17 relative to the outer rod 18.

An upper side of the contact end 20 is provided with a flange 39, and a length of the contact end 20 extending out of the end cover 19 is determined by a length from the contact end 20 to the flange 39, that is, the downward movement distance of the inner rod 17 relative to the outer rod 18 is also limited by the flange 39.

In some implementations, when the locking mechanism 2 is vertically placed, the inner rod 17 moves downward under the action of gravity, so that the contact end 20 extends out of the end cover 19. When the inner rod moves downward and is blocked by the flange 39, the second spring 37 is just in a natural uncompressed and unstretched state. In some implementations, when the locking mechanism 2 is vertically placed and is in the initial state, the outer rod 17 tends to move downward under the action of gravity, and at this time, the end cover 19 is supported by the combined rotary wheel 5, so that the first spring 38 on the outer rod 18 is also in a natural uncompressed and unstretched state.

### Rotary driving mechanism

The rotary driving mechanism 3 is located below the locking mechanism 2, and rotates to drive the locking mechanism 2 to move up and down. The rotary driving mechanism 3 includes two rotary wheels, a support layer 16 and a motor. The two rotary wheels are fixed on the support layer and driven by the motor to rotate.

In some implementations, the rotary wheels are fixed in an order of a first rotary wheel 14, a second rotary wheel 15 and the support layer 16. The two rotary wheels are fixed into a whole and rotate synchronously. The first rotary wheel 14 is able to contact the contact end 20 of the inner rod 17 and drive the inner rod 17 to move, and the second rotary wheel 15 is able to contact the end cover 19 of the outer rod 18 and drive the outer rod 18 to move.

In some implementations, the rotary wheels may also be fixed in an order of the second rotary wheel 15, the first rotary wheel 14 and the support layer 16. No matter which method is adopted, the first rotary wheel 14 should be able to contact the contact end 20 of the inner rod 17 and drive the inner rod 17 to move, and the second rotary wheel 15 should be able to contact the end cover 19 of the outer rod 18 and drive the outer rod 18 to move.

In some implementations, the support layer 16 may be a bracket with a simple structure, as long as it can support the two rotary wheels and be driven by the motor to rotate, it can be used to prepare the rotary driving mechanism 3.

An overall shape of the rotary wheels is similar to an ellipse which includes a major axis 12 and a minor axis 13. When the major axis 12 of the ellipse is in contact with the locking mechanism 2, the locking mechanism 2 moves up, and when the minor axis 13 of the ellipse is in contact with the locking mechanism 2, the locking mechanism 2 moves down. The size difference between the major axis 12 and the minor axis 13 of the ellipse can be designed according to the up-and-down movement distance required by the locking mechanism 2.

The first rotary wheel 14 and the second rotary wheel 15 are designed based on the ellipse according to the actions to be completed. The elliptical overall shape is changed into an irregular ellipse, and notches are formed in the first rotary wheel 14 such that a height difference is formed between edges of the first rotary wheel 14 and the second rotary wheel 15. Moreover, while the height difference gradually changes, an initial state region, a first ascending region, a rapid descending region, a locking state region, an ascending region and a releasing region are formed. During the rotation process of the combined rotary wheel 5, each region cooperates with the locking mechanism 2 such that the locking mechanism 2 is respectively in the initial state, the first ascending state, the rapid descending state, the locking state, the second ascending state and the releasing state.

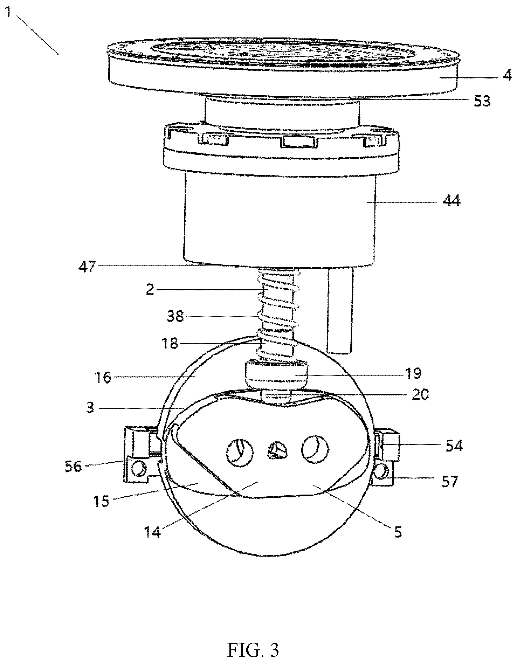

As shown in FIG. 3 to FIG. 5, the reagent disc control device 1 provided by the invention includes the locking mechanism 2 and the rotary driving mechanism 3. The locking mechanism 2 is configured to lock or release the reagent disc 4, and the rotary driving mechanism 3 is configured to drive the locking mechanism 2 to move up and down, so that the locking mechanism 2 locks or releases the reagent disc 4. The reagent disc 4 is located above the locking mechanism 2, and the locking mechanism 2 is located above the rotary driving mechanism 3. The rotary driving mechanism 3 includes the first rotary wheel 14 and the second rotary wheel 15. The first rotary wheel 14 and the second rotary wheel 15 are fixed in position relative to each other and are capable of rotating synchronously. The first rotary wheel and the second rotary wheel are combined to form the combined rotary wheel 5. The combined rotary wheel 5 includes a locking region 58 and an unlocking region 59. The locking region 58 is configured to drive the locking mechanism 2 to lock the reagent disc 4, and the unlocking region 59 is configured to drive the locking mechanism 2 to unlock the reagent disc 4. The first rotary wheel 14 and the second rotary wheel 15 in the unlocking region 59 are in a non-flush state. The non-flush state in the invention means that there is a height difference between the first rotary wheel 14 and the second rotary wheel 15 and the first rotary wheel 14 is lower than the second rotary wheel 15.

The combined rotary wheel 5 in the existing device shown in FIG. 1 also has a locking region 58 and an unlocking region 59, but only in the locking region 58, there is a region where there is a height difference between the first rotary wheel 23 and the second rotary wheel 24, and in other positions, the first rotary wheel 23 and the second rotary wheel 24 are almost flush or completely overlapping. This easily causes the locking mechanism 2 to shake during the process of locking to releasing the reagent disc 4. This process is also exactly when the test result needs to be read. The vibration of the fluorescence used for reading on the reagent disc 4 will directly affect the reading result. As a result, although the combined rotary wheel 5 having such a structure can complete the up-and-down movement of the locking mechanism 2 and implement locking and releasing of the reagent disc 4, the combined rotary wheel 5 cannot directly contact the locking mechanism 2, which causes the locking mechanism 2 to shake (especially during the process of locking to releasing the reagent disc 4) and affects the accuracy of fluorescence reading in the detection result. In this case, a gasket must be used to keep the operating stability of the locking mechanism 2.

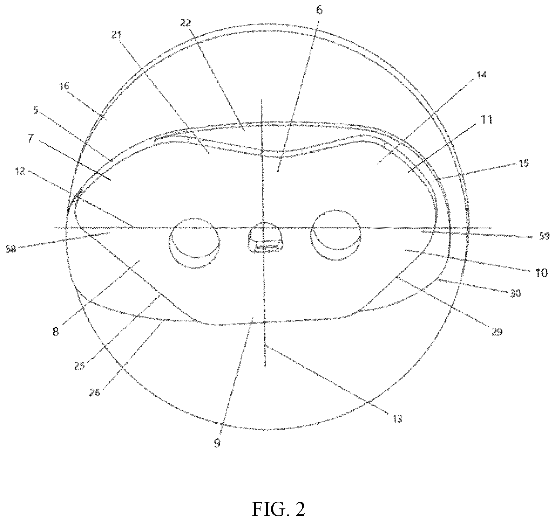

In the combined rotary wheel 5 (as shown in FIG. 2) provided by the invention, a region where there is a reasonable height difference between the first rotary wheel 14 and the second rotary wheel 15 is also arranged in the unlocking region 59, so that the inner rod 17 and the outer rod 18 that have a height difference contact the first rotary wheel edge 29 and the second rotary wheel edge 30 that also have a height difference, thereby driving the locking mechanism 2 to complete the unlocking process more smoothly and stably and effectively preventing the locking mechanism 2 from shaking. Therefore, even if the combined rotary wheel 5 directly contacts the locking mechanism 2 and no gasket or partition is arranged, the inner rod 17 and the outer rod 18 can move stably without shaking during the whole process, especially during the process of locking to releasing the reagent disc 4, which can better keep the movement stability of the locking mechanism 2 and prevent the locking mechanism 2 from shaking, affecting the reading result.

As shown in FIG. 3 to FIG. 5, the first rotary wheel 14 and the second rotary wheel 15 in a non-flush state means that there is a distance between the first rotary wheel edge 29 and the second rotary wheel edge 30. The locking mechanism 2 includes the inner rod 17 and the outer rod 18, and the inner rod 17 is located inside the outer rod 18. The first rotary wheel 14 is configured to drive the inner rod 17 to move, and the second rotary wheel 15 is configured to drive the outer rod 18 to move. The outer rod 18 is a hollow rod, and the inner rod 17 can run through the outer rod 18 and move up and down in the outer rod 18. Preferably, the rotary driving mechanism 3 includes the first rotary wheel 14, the second rotary wheel 15 and the support layer 16. The first rotary wheel 14 and the second rotary wheel 15 are installed on the support layer 16 together. The first rotary wheel 14 is on an outer side, and the second rotary wheel 15 is located between the first rotary wheel 14 and the support layer 16.

As shown in FIG. 2, the unlocking region 59 of the combined rotary wheel 5 includes a region where the distance between the first rotary wheel edge 29 and the second rotary wheel edge 30 first gradually increases and then gradually decreases. The combined rotary wheel 5 has an overall shape close to an ellipse which includes a major axis 12 and a minor axis 13 that respectively pass through the center of the ellipse. During the process of the unlocking region 59 coming into contact with the locking mechanism 2, i.e., during the shift from a major axis region to a minor axis region, the second rotary wheel edge 30 is in the shape of a regular ellipse and the first rotary wheel edge 29 is in the shape of an oblique line, which leads to a notch. Thereby, there is a distance between the first rotary wheel edge 29 and the second rotary wheel edge 30 in the unlocking region 59, and this distance first gradually increases and then gradually decreases. With such a distance design, after the combined rotary wheel 5 comes into contact with the locking mechanism 2, the height of the outer rod 18 is kept unchanged first, the first rotary wheel edge 29 gradually comes into contact with the inner rod 17 diagonally from the lower side of the inner rod 17 and then gradually pushes up the inner rod 18, which is a steady and smooth process that can effectively prevent the locking mechanism 2 from shaking. The unlocking region 59 includes an ascending region 10 and a releasing region 11, and the distance between the first rotary wheel edge 29 and the second rotary wheel edge 30 in the ascending region 10 first gradually increases and then gradually decreases to a close position so as to gradually push up the inner rod 17 while keeping the outer rod 18 unchanged. A distance between a first rotary wheel edge 31 and a second rotary wheel edge 32 in the releasing region 11 is maintained at the close position so as to make the inner rod 17 and the outer rod 18 leave the reagent disc 4 together while keeping relative positions unchanged. The close position here means the first rotary wheel edge 31 is very close to the second rotary wheel edge 32. This position can be designed according to the characteristics of the locking mechanism 2. When the inner rod 17 and the outer rod 18 in the locking mechanism 2 are close in position relative to each other, the steel balls 33 can be completely aligned with the steel ball grooves 34 in the inner rod 17. This position is defined as the close position. In the invention, the close position means that there is a height difference of about 1 mm between the first rotary wheel edge 31 and the second rotary wheel edge 32, because when the inner rod 17 ascends until there is a height difference of about 1 mm from the outer rod 18, the steel balls 33 are completely aligned with the steel ball grooves 34 and the steel balls 33 are completely inside the steel ball grooves 34. In this state, the contact end 20 of the inner rod 17 and the end cover 19 of the outer rod 18 can be kept in contact with the combined rotary wheel 5 all the time and move synchronously, thereby realizing smooth unlocking.

As shown in FIG. 6, by arranging the ascending region 10 and the releasing region 11 in the unlocking region 59 of the combined rotary wheel 5, during the rotation process of the combined rotary wheel 5, in the ascending region 10, the inner rod 17 and the outer rod 18 that have a height difference are allowed to contact the first rotary wheel edge 29 and the second rotary wheel edge 30 that also have a height difference diagonally from the lower side, and then the inner rod 17 is gradually pushed up while keeping the height of the outer rod 18 unchanged. After a proper relative height between the inner rod 17 and the outer rod 18 is achieved, the steel balls 33 in the locking mechanism 2 are retracted. Then, in the releasing region 11, on the premise of keeping the distance between the first rotary wheel edge 29 and the second rotary wheel edge 30 unchanged, i.e. keeping relative positions of the inner rod 17 and the outer rod 18 unchanged, the inner rod 17 and the outer rod 18 are allowed to move down to leave the reagent disc 5, so that the reagent disc 5 is unlocked. With this design, the combined rotary wheel 5 can directly contact the locking mechanism 2 without adding a gasket. In this way, the reagent disc 4 can be locked stably, and the movement stability of the locking mechanism 2 can be ensured during the process of locking to unlocking the reagent disc 4, which can prevent the locking mechanism 2 from shaking, affecting the reading result. The locking region 58 also includes a region where a distance between a first rotary wheel edge 25 and a second rotary wheel edge 26 first gradually increases and then gradually decreases. The locking region 58 includes a first ascending region 7 and a rapid descending region 8. The distance between the first rotary wheel edge 25 and the second rotary wheel edge 26 in the rapid descending region 8 first gradually increases and then gradually decreases so as to make the inner rod 17 descend rapidly and lock the reagent disc 4. With the arrangement of the combined rotary wheel 5 in the locking region 58, during the rotation process of the combined rotary wheel 5, the locking mechanism 2 can be smoothly and steadily driven to lock the reagent disc 4. The unlocking region 59 and the locking region 58 are respectively located on two sides of the combined rotary wheel 5. When the combined rotary wheel 5 rotates clockwise, the locking region 58 is on a left side, and the unlocking region 59 is on a right side. When the combined rotary wheel 5 rotates counterclockwise, the locking region 58 is on the right side, and the unlocking region 59 is on the left side.

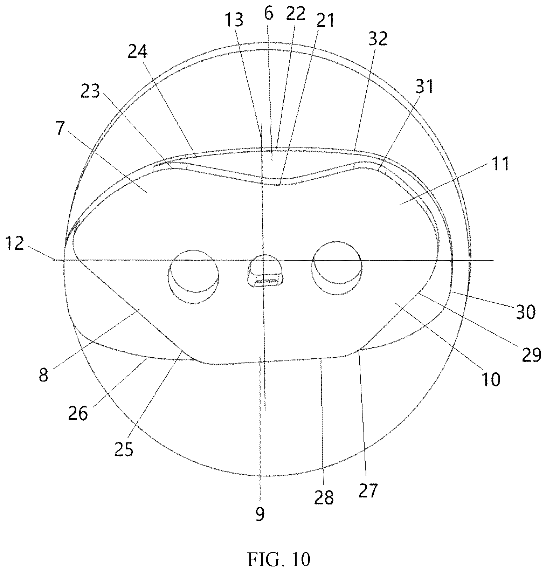

Preferably, as shown in FIG. 10, in the first ascending region 7 of the locking region 58, a first rotary wheel edge 23 is flush with a second rotary wheel edge 24. In the locking region 58 of the combined rotary wheel 5, the first rotary wheel edge 23 gradually ascends to be flush with the second rotary wheel edge 24, instead of to the close position. This is a preferred structural design, mainly because this step focuses on pushing the inner rod 17 to the end so as to ensure that the steel balls 33 can be smoothly popped out when the inner rod 17 falls and prevent the reagent disc 4 from being locked unsuccessfully, and there is no need to additionally considering whether the contact end 20 and the end cover 19 are always in contact with the combined rotary wheel 5. The first rotary wheel edge 23 in the rapid descending region 8 of the locking region 58 is in a shape of a first oblique line, and the first rotary wheel edge 29 in the ascending region 10 of the unlocking region 59 is in a shape of a second oblique line. A slope of the first oblique line is greater than a slope of the second oblique line. In addition, the first oblique line and the second oblique line are both connected with other parts in the first rotary wheel 14 through arcs, which makes the process of pushing the inner rod 17 smooth and steady. With this design, the combined rotary wheel 5 preferably rotates clockwise, and in this case, the locking region 58 is on the left side, and the unlocking region 59 is on the right side.

The combined rotary wheel 5 further includes an initial state region 6, configured to make the locking mechanism 2 return to an initial state. There is a distance between a first rotary wheel edge 21 and a second rotary wheel edge 22 in the initial state region 6. The combined rotary wheel 5 can be in direct contact with the locking mechanism 2 so as to ensure the accuracy of the fluorescence detection reading in the reagent disc 4, and the locking mechanism 2 can flexibly switch between the initial state and the working state. By arranging the initial state region 6 close to the minor axis in the combined rotary wheel 5, there is a distance between the first rotary wheel edge 21 and the second rotary wheel edge 22 in this region, so that the locking mechanism 2 can be in the initial state when in this position. At this time, the springs in the locking mechanism 2 are both in a natural uncompressed and unstretched state. After entering the working state, the springs of the locking mechanism 2 are compressed. The distance between the first rotary wheel edge 21 and the second rotary wheel edge 22 in the initial state region 6 first gradually increases and then gradually decreases. When the locking mechanism 2 is in a position where the distance between the first rotary wheel edge 21 and the second rotary wheel edge 22 in the initial state region 6 is the largest, the locking mechanism 2 is in the initial state. When the locking mechanism 2 is in other positions of the combined rotary wheel 5, the locking mechanism 2 is in the working state. The combined rotary wheel 5 further includes a locking state region 9, configured to maintain the reagent disc 4 in a locked state so as to perform centrifugal rotation or analysis and detection. When the reagent disc 4 is in the locked state, centrifugation, and analysis and detection can be performed. In this case, the lower end of the locking mechanism 2 is suspended and is not in contact with the combined rotary wheel 5. Therefore, during this process, the combined rotary wheel 5 only needs to be in the minor axis region of the ellipse without contacting the locking mechanism 2.

As shown in FIG. 10, the combined rotary wheel 5 includes the initial state region 6, the first ascending region 7, the rapid descending region 8, the locking state region 9, the ascending region 10 and the releasing region 11. During the rotation process of the combined rotary wheel 5, each region cooperates with the locking mechanism 2 such that the locking mechanism 2 is respectively in the initial state, the first ascending state, the rapid descending state, the locking state, the second ascending state and the releasing state. The initial state region 6 and the locking state region 9 are respectively located in edge regions where the minor axis 13 of the combined rotary wheel 5 is located, and the first ascending region 7, the rapid descending region 8, the ascending region 10 and the releasing region 11 are closer to edge regions where the major axis 12 is located.

The rotary driving mechanism 3 further includes the support layer 16. The first rotary wheel 14 and the second rotary wheel 15 are installed on the support layer 16 together. The first rotary wheel 14 is on an outer side, and the second rotary wheel 15 is located between the first rotary wheel 14 and the support layer 16. The first rotary wheel 14 and the second rotary wheel 15 are fixed in position relative to each other and are capable of rotating synchronously.

The locking mechanism 2 is located above the rotary driving mechanism 3. The locking mechanism 2 includes the inner rod 17 and the outer rod 18, and the inner rod 17 is located inside the outer rod 18. The first rotary wheel 14 is configured to drive the inner rod 17 to move up and down, and the second rotary wheel 15 is configured to drive the outer rod 18 to move up and down. The outer rod 18 is a hollow rod, and the inner rod 17 can run through the outer rod 18 and move up and down in the outer rod 18. The lower end of the outer rod 18 is provided with the end cover 19, and the lower end of the inner rod 17 is provided with the contact end 20. During an operation process of the locking mechanism 2, the contact end 20 is extendable out of the end cover 19 or retractable into the end cover. During the rotation process of the combined rotary wheel 5, the contact end 20 is in direct contact with a surface of the first rotary wheel 14, and the end cover 19 is in direct contact with a surface of the second rotary wheel 15. The process of locking or releasing the reagent disc 4 by the locking mechanism 2 needs to be implemented through the cooperative movements of the outer rod 18 and the inner rod 17. For example, sometimes, the inner rod 17 needs to move faster, and the outer rod 18 needs to move slower; or sometimes, the inner rod 17 and the outer rod 18 need to move at the same time. The cooperative movements of the outer rod 18 and the inner rod 17 are respectively implemented through the cooperative movements of the end cover 19 and the contact end 20, and the movements of the end cover 19 and the contact end 20 are respectively implemented through direct contact with the second rotary wheel 15 and the first rotary wheel 14.

When the locking mechanism 2 is in the initial state, the initial state region 6 of the combined rotary wheel 5 cooperates with the locking mechanism 2, the first rotary wheel edge 21 in the initial state region 6 is lower than the second rotary wheel edge 22, the contact end 20 is in contact with the first rotary wheel edge 21, and the end cover 19 is in contact with the second rotary wheel edge 22. When the locking mechanism 2 is in the first ascending state, the first ascending region 7 of the combined rotary wheel 5 cooperates with the locking mechanism 2, the first rotary wheel edge 23 in the first ascending region 7 gradually ascends to be flush with the second rotary wheel edge 24, the contact end 20 is in contact with the first rotary wheel edge 23, and the end cover 19 is in contact with the second rotary wheel edge 24. When the locking mechanism 2 is in the rapid descending state, the rapid descending region 8 of the combined rotary wheel 5 cooperates with the locking mechanism 2, the first rotary wheel edge 25 in the rapid descending region 8 descends rapidly, the end cover 19 is in contact with the second rotary wheel edge 26, and the contact end 20 is unable to contact the first rotary wheel edge 25. When the locking mechanism 2 is in the locking state, the locking state region 9 of the combined rotary wheel 5 cooperates with the locking mechanism 2, the first rotary wheel edge 27 in the locking state region 9 ascends and is flush with the second rotary wheel edge 28, the end cover 19 is unable to contact the second rotary wheel edge 28, and the contact end 20 is unable to contact the first rotary wheel edge 27. When the locking mechanism 2 is in the second ascending state, the ascending region 10 of the combined rotary wheel 5 cooperates with the locking mechanism 2, the first rotary wheel edge 29 in the ascending region 10 descends and gradually ascends to be close to the second rotary wheel edge 30, the contact end 20 is in contact with the first rotary wheel edge 29, and the end cover 19 is in contact with the second rotary wheel edge 30. When the locking mechanism 2 is in the releasing state, the releasing region 11 of the combined rotary wheel 5 cooperates with the locking mechanism 2, the first rotary wheel edge 31 in the releasing region 11 is kept close to the second rotary wheel edge 32, the contact end 20 is in contact with the first rotary wheel edge 31, and the end cover 19 is in contact with the second rotary wheel edge 32.

As shown in FIG. 8 to FIG. 9, the locking mechanism 2 further includes the steel balls 33, and the inner rod 17 is provided with the steel ball grooves 34. The steel balls 33 are capable of entering the steel ball grooves 34 or sliding out of the steel ball grooves 34 during an up-and-down movement process of the inner rod 17. The outer rod 18 is provided with two hollowed circular holes 58. The two steel balls 33 can respectively protrude out of the two circular holes 58 to increase a lateral size of the outer rod 18 at the position of the circular holes 58, so that the outer rod can be clamped with the mounting hole 50 with a smaller size in the reagent disc. When the locking mechanism 2 extends into the reagent disc 4 and the steel balls 33 slide out of the steel ball grooves 34, the steel balls 33 can clamp, fix and lock the reagent disc 4. When the steel balls 33 return to the steel ball grooves 34, the reagent disc 4 is unlocked and released. That is, the steel balls 33 have a state of sliding out and a state of being accommodated. When the steel balls slide out, the reagent disc 4 can be clamped. When the steel balls are accommodated, the reagent disc 4 is released.

In the reagent disc control device 1, the locking mechanism 2 is in a vertical state. When the upper end 35 of the inner rod is flush with the upper end 36 of the outer rod, the steel ball grooves 34 in the inner rod 17 are just at the positions where the steel balls 33 are located, and the steel balls 33 can slide and be accommodated in the steel ball grooves 34. When the inner rod 17 moves down such that the upper end 35 of the inner rod is lower than the upper end 36 of the outer rod, the steel ball grooves 34 in the inner rod 17 move down and leave the positions where the steel balls 33 are located, and the steel balls 33 are forced to slide out of the steel ball grooves 34. Since other positions of the inner rod 17 are all larger in size than the positions where the steel ball grooves 33 are located, the steel balls 33 are pressed outward to protrude so as to clamp the reagent disc 4. That is, the height of the steel balls 33 is determined by the outer rod 18, and whether the inner rod 17 moves up or down relative to the outer rod 18, the height of the steel balls 33 is unchanged relative to the outer rod 18. When the inner rod 17 is at a higher position in the outer rod 18 (for example, the upper end 35 of the inner rod is flush with the upper end 36 of the outer rod or the upper end 35 of the inner rod is slightly lower than the upper end 36 of the outer rod), the steel balls 33 are accommodated in the steel ball grooves 34. When the inner rod 17 descends and the inner rod 17 is at a lower position relative to the outer rod 18, the steel balls 33 are pressed out.

As shown in FIG. 5 to FIG. 9, the outer rod 18 is provided with a first spring 38 configured to control an up-and-down movement distance of the outer rod 18. The inner rod 17 is provided with a second spring 37 configured to control an up-and-down movement distance of the inner rod 17. The first spring 38 has larger elasticity. The locking of the reagent disc 4 requires the first spring 38 to provide a downward pulling force, so the first spring 38 needs to have enough elastic force to pull down the locking mechanism 2 to maintain the locking of the reagent disc 4.

The contact end 20 is provided with a flange 39 configured to limit a distance that the contact end 20 extends out of the end cover 19. The lower end of the outer rod 18 is provided with a groove 59 for the contact end 20 with the flange 39 to move up and down. An upper end 40 of the second spring 37 is connected to an inner wall of the outer rod 18, and a lower end 41 is connected to the flange 39. The diameter of the contact end 20 increases at the flange 39 position. When the inner rod 17 moves downward, the contact end 20 extends downward out of the outer rod 18. When the contact end 20 moves down to the flange 39 position, the contact end is blocked since the flange 39 is larger in size than the hollow position 42 of the end cover 19, thereby preventing the inner rod 17 from continuing moving downward. Therefore, the distance from the contact end 20 to the flange 39 position is the longest distance that the inner rod 17 can extend out of the outer rod 18 when the locking mechanism 2 is in the natural vertical state. The inner wall of the outer rod 18 forms a platform 43 at the contact position of the second spring 37, and the second spring 37 is connected and fixed with the platform 43.

The reagent disc control device 1 further includes a centrifugal driving component 44, configured to drive the reagent disc 4 to rotate centrifugally. The centrifugal driving component 44 is hollow, and the locking mechanism 2 runs through the centrifugal driving component 44 and contacts the reagent disc 4. An upper end 45 of the first spring 38 is connected to a bottom surface 47 of the centrifugal driving component 44, and a lower end 46 is connected to the end cover 19. The hollow part 48 of the centrifugal driving component 44 provides a space for the locking mechanism 2 to move up and down and also helps the locking mechanism 2 to stay in the vertical state without tilting left and right. A lower bottom surface 47 of the centrifugal driving component 44 provides a support for the first spring 38.

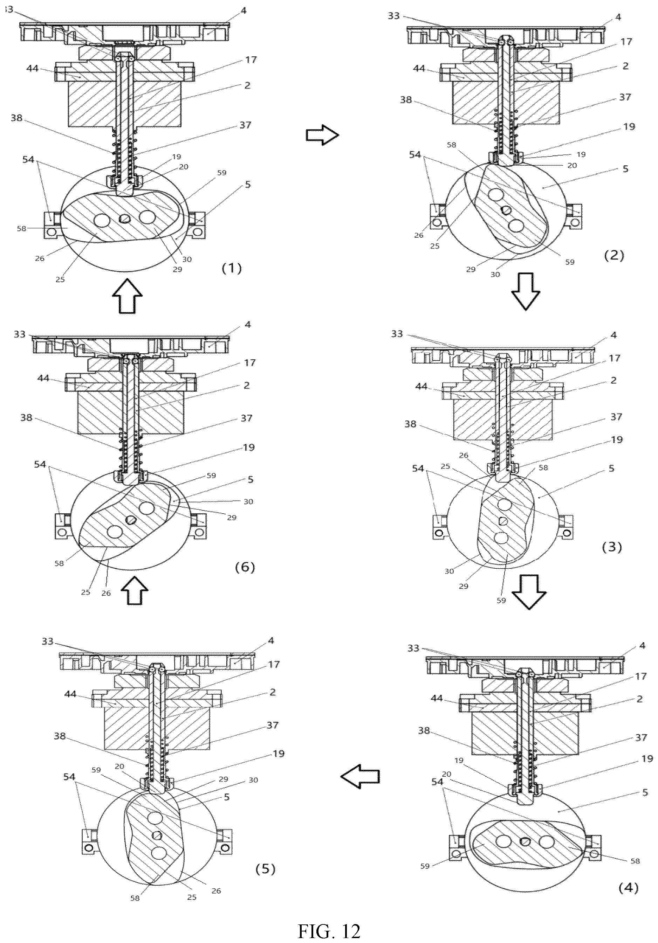

Under the cooperative action of the inner rod 17, the outer rod 18, the steel balls 33, the steel ball grooves 34, the first spring 38 and the second spring 37 of the reagent disc control device 1, the locking mechanism 2 switches among the initial state, the first ascending state, the rapid descending state, the locking state, the second ascending state and the releasing state to lock and release the reagent disc 4, and needs to stay in the vertical state with the assistance of the centrifugal driving component 44. The main process is as follows:
1. As shown in FIG. 12(1), when the locking mechanism 2 is in the initial state, the locking mechanism 2 is in the vertical state and located in the hollow position 48 of the centrifugal driving component 44 and stays still, the inner rod 17 and the outer rod 18 are both at the lowest positions and are lower than a top surface of the centrifugal driving component 44, the contact end 20 of the inner rod 17 extends out of the end cover 19 of the outer rod 18, and the flange 39 is blocked by the end cover 19 below the flange. At this time, the initial state region 6 of the combined rotary wheel 5 cooperates with the locking mechanism 2, the bottom of the end cover 19 of the outer rod 18 is in direct contact with the second rotary wheel edge 22, the bottom of the contact end 20 of the inner rod 17 is in direct contact with the first rotary wheel edge 21, and the first spring 38 and the second spring 37 are both in the natural uncompressed and unstretched state. The first rotary wheel edge 21 is lower than the second rotary wheel edge 22, and the height difference between the first rotary wheel edge 21 and the second rotary wheel edge 22 is exactly equal to the distance from the contact end 20 to the flange 39 position, which is the longest distance that the inner rod 17 can extend out of the outer rod 18 from the lower side. Moreover, the height difference should not be too small, otherwise, the inner rod 17 will move upward, the distance from the steel balls 33 to the steel ball grooves 34 will be too close, and the second spring 37 will always be in the compressed state, which will affect the operation performance subsequently and may cause errors after repeated operations. As a result, preferably, the height difference between the first rotary wheel edge 21 and the second rotary wheel edge 22 is exactly equal to the longest distance that the inner rod 17 can extend out of the outer rod 18 from the lower side, and in this case, the second spring 37 can be in the natural uncompressed and unstretched state. Thereby, the movements of the inner rod 17 and the outer rod 18 can be controlled more accurately during the whole process, and the energy conversion caused by the height difference can be fully utilized in the subsequent operations. When the locking mechanism 2 is in the initial state, the reagent disc 4 can be freely mounted to and removed from the corresponding position on the centrifugal driving component 44 without being limited by the locking mechanism 2. Therefore, at this time, the reagent disc 4 can be put in place and get ready to enter the working state.
2. As shown in FIG. 12(2), as the combined rotary wheel 5 starts to rotate clockwise, the locking mechanism 2 enters the first ascending state from the initial state, the region in the combined rotary wheel 5 that cooperates with the locking mechanism 2 switches from the initial state region 6 to the first ascending region 7, the first rotary wheel edge 23 gradually ascends to be flush with the second rotary wheel edge 24, the contact end 20 is also pushed up by the first rotary wheel edge 23 to be flush with the end cover 19, the inner rod 17 moves up, the steel ball grooves 34 in the inner rod 17 ascend to the positions where the steel balls 33 are located, and the steel balls 33 immediately slide into the steel ball grooves 34 and are accommodated therein. Next, as the combined rotary wheel 5 continues rotating, the contact positions of the contact end 20 and the end cover 19 respectively shift from the minor axis region to the major axis region of the ellipse, so that the inner rod 17 and the outer rod 18 are pushed up together, and the upper ends of the inner rod 17 and the outer rod 18 are together inserted into the mounting hole 50 in the middle of the reagent disc 4 and reach the upper side of a mounting and fixing surface 51 of the reagent disc 4. Since the steel balls 33 are accommodated inward into the steel ball grooves 34, the lateral size where the steel balls 33 are located is consistent with the lateral size of other positions of the locking mechanism 2, so that the position where the steel balls are located can be inserted into the reagent disc 4 through the mounting hole 50 in the middle of the reagent disc 4 without being blocked. During this process, both the first spring 38 and the second spring 37 gradually enter the compressed state, and both the inner rod 17 and the outer rod 18 gradually reach the highest position.
3. As shown in FIG. 12(3), as the combined rotary wheel 5 continues rotating clockwise, the locking mechanism 2 enters the rapid descending state from the first ascending state, and the region in the combined rotary wheel 5 that cooperates with the locking mechanism 2 switches from the first ascending region 7 to the rapid descending region 8. The rapid descending here means only the inner rod 17 rapidly descends while the outer rod 18 does not descend. At this time, the first rotary wheel edge 25 rapidly descends with a large amplitude, such that the contact end 20 is unable to contact the first rotary wheel edge 25, and the inner rod 17 loses its support and descends rapidly under the action of gravity until the flange 39 position is blocked by the end cover 19 on the lower side. The second rotary wheel edge 26 is still maintained at a higher position such that the outer rod 18 is still supported, the inner rod 17 is at a lower position relative to the outer rod 18, and the steel balls 33 are pressed out. The second spring 37 returns to the initial natural uncompressed state, and the first spring 38 is still compressed.
4. As shown in FIG. 12(4), as the combined rotary wheel 5 continues rotating clockwise, the locking mechanism 2 enters the locking state from the rapid descending state, and the region in the combined rotary wheel 5 that cooperates with the locking mechanism 2 switches from the rapid descending region 8 to the locking state region 9. Since the contact positions of the contact end 20 and the end cover 19 shift from the major axis region to the minor axis region of the ellipse, the position of the outer rod 18 also starts to descend. The position where the steel balls 33 that are popped out are located is in the mounting hole 50 of the reagent disc 4. Once the outer rod 18 moves downward, the steel balls 33 can be clamped by the mounting hole 50 of the reagent disc 4. The outlet of the mounting hole 50 of the reagent disc 4 is formed by a plurality of arcs 51 that form a lotus shape, and slightly tapers downward, and each pedal 52 of the lotus can successfully clamp the steel balls 33. Next, since the steel balls 33 are clamped, neither the inner rod 17 nor the outer rod 18 can continue moving downward. At this time, the combined rotary wheel is in the minor axis region of the ellipse, the first rotary wheel edge 27 ascends to be flush with the second rotary wheel edge 28, the end cover 19 is unable to contact the second rotary wheel edge 28, and the contact end 20 is also unable to contact the first rotary wheel edge 27. At the same time, the reagent disc 4 is also subjected to a downward pulling force from the first spring 38 on the outer rod 18. Under the combined actions of the two steel balls 33 and the first spring 38 of the locking mechanism 2, the reagent disc 4 is firmly pressed on a rotating surface 53 of the hollow centrifugal driving component 44. Then, the reagent disc can be centrifuged under the action of the centrifugal driving component 44, and the sample in the reagent disc 4 can be treated and analyzed. When the locking mechanism 2 is in the locking state, the first spring 38 on the outer rod 18 is in the compressed state, but the second spring 37 on the inner rod 17 is in the natural uncompressed state. That is, the device can provide as many opportunities as possible for the springs to recover from deformation, thereby reducing the adverse effects caused by long-time compression.
5. As shown in FIG. 12(5), after the analysis is completed, the combined rotary wheel 5 continues to rotate clockwise, the locking mechanism 2 enters the second ascending state from the locking state, and the region in the combined rotary wheel 5 that cooperates with the locking mechanism 2 switches from the locking state region 9 to the ascending region 10. During this process, the first rotary wheel 14 is provided with a structure which descends and then gradually ascends to be close to the second rotary wheel edge 30 with respective to the second rotary wheel 15, that is, there is a distance between the first rotary wheel edge 29 and the second rotary wheel edge 30, and the distance first gradually increases and then gradually decreases when shifting from the minor axis to the major axis. With this arrangement, after the first rotary wheel 14 comes into contact with the contact end of the inner rod, the inner rod 17 can be gradually pushed up such that the second spring 38 in the inner rod 17 can smoothly switch from the natural uncompressed state to the compressed state until the relative positions of the inner rod 17 and the outer rod 18 become close, and the steel balls 33 can slide into the steel ball grooves 34 of the inner rod 17. This process can make the inner rod 17 switch more smoothly and ascend stably, and avoids the problem in the existing combined rotary wheel 5: the inner rod 17 and the outer rod 18 that have a height difference directly contact the first rotary wheel edge and the second rotary wheel edge that are flush, causing the locking mechanism to shake. Therefore, with the arrangement of the second ascending region in the combined rotary wheel 5, even if the locking mechanism 2 is in direct contact with the combined rotary wheel 5, the locking mechanism can be prevented from shaking, thereby ensuring the accuracy of the detection result.

During this process, the contact end 20 is in contact with the first rotary wheel edge 29, the end cover 19 is in contact with the second rotary wheel edge 30, the first spring 38 gradually enters the compressed state, and the second spring 37 is always in the compressed instate. Then, as the combined rotary wheel 5 shifts from the minor axis region to the major axis region, both the inner rod 17 and the outer rod 18 ascend to a higher position.

6. As shown in FIG. 12(6), the combined rotary wheel 5 continues rotating clockwise, the locking mechanism 2 enters the releasing state from the second ascending state, the region in the combined rotary wheel 5 that cooperates with the locking mechanism 2 switches from the ascending region 10 to the releasing region 11. When in the releasing region 11, the first rotary wheel edge 31 is kept close to the second rotary wheel edge 32 and the first rotary wheel edge 31 is slightly lower than the second rotary wheel edge 32, so the inner rod 17 is kept at a higher position relative to the outer rod 18, and the steel balls 33 stay accommodated in the steel ball grooves 34. Then, as the combined rotary wheel 5 shifts from the major axis region to the minor axis region, the first rotary wheel 14 and the second rotary wheel 15 together drive the inner rod 17 and the outer rod 18 to descend, and the inner rod and the outer rod are together retracted from the mounting hole 50 of the reagent disc 4 until returning to the initial state. Since the inner rod 17 is always kept at a higher position relative to the outer rod 18 and the steel balls 33 are always in the steel ball grooves 34, the inner rod will not be clamped by the mounting hole 50 of the reagent disc 4 and can be retracted to the lowest point smoothly. Thereby, the locking mechanism 2 can gradually exit the reagent disc 4 in a more stable stat, and even if the locking mechanism 2 is in direct contact with the combined rotary wheel 5, the locking mechanism will not shake, thereby ensuring the accuracy of the detection result.

Here, the first rotary wheel edge 31 being slightly lower than the second rotary wheel edge 32 in position means that there is a height difference of about 1 mm between the first rotary wheel edge 31 and the second rotary wheel edge 32, because when the inner rod 17 ascends until there is a height difference of about 1 mm from the outer rod 18, the steel balls 33 are completely aligned with the steel ball grooves 34 and the steel balls 33 are completely inside the steel ball grooves 34. In this state, the contact end 20 of the inner rod 17 and the end cover 19 of the outer rod 18 can be kept in contact with the combined rotary wheel 5 all the time, thereby realizing smooth unlocking. During this process, the contact end 20 is in contact with the first rotary wheel edge 31 all the time, the end cover 19 is in contact with the second rotary wheel edge 32 all the time, and with the rotation of the combined rotary wheel 5, the first spring 38 and the second spring 37 gradually return to the natural uncompressed state, i.e., the initial state, from the compressed state.

In step 2, the first rotary wheel edge 23 gradually ascends to be flush with the second rotary wheel edge 24, mainly because this step focuses on pushing the inner rod 17 to the end so as to ensure that the steel balls 33 can be smoothly popped out when the inner rod 17 falls and prevent the reagent disc 4 from being locked unsuccessfully, and there is no need to consider whether the contact end 20 and the end cover 19 are in contact with the combined rotary wheel 5 all the time.

After returning to the initial state, the whole locking mechanism 2 has been retracted into the hollow centrifugal driving component 44, and the reagent disc 4 can be freely removed.

### Specific implementations

The invention will be further described in detail below with reference to the accompanying drawings and embodiments. It should be noted that the following embodiments are intended to facilitate the understanding of the invention and do not limit the invention in any way.

### Embodiment 1: Reagent disc control device provided by the invention

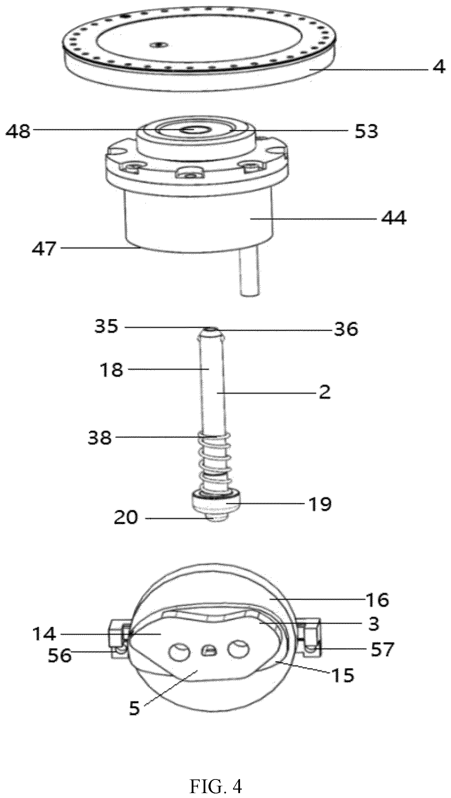

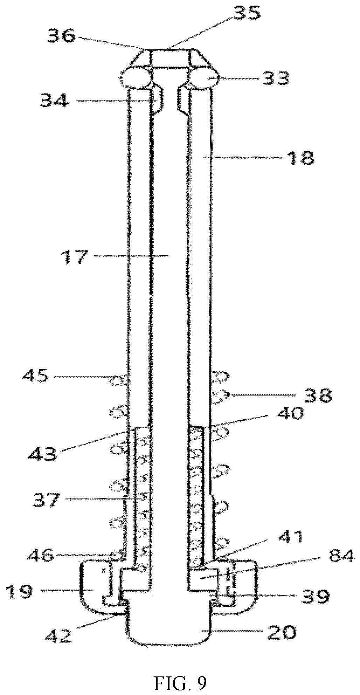

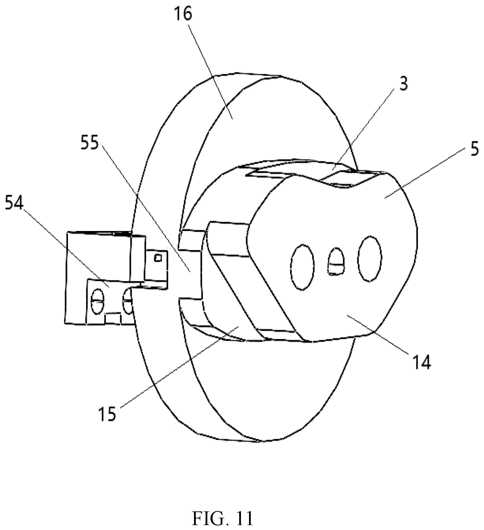

A reagent disc control device provided by this embodiment is shown in FIG. 2 to FIG. 12. FIG. 2 is a schematic structural view of a combined rotary wheel. FIG. 3 is an overall structural view of the reagent disc control device. FIG. 4 is an exploded view of the reagent disc control device. FIG. 5 is a sectional view of the reagent disc control device. FIG. 6 illustrates schematic views showing a movement process of a locking region of the combined rotary wheel. FIG. 7 is a schematic structural view of a reagent disc. FIG. 8 is a schematic structural view of a locking mechanism. FIG. 9 is a sectional view of the locking mechanism. FIG. 10 is a schematic region partitioning view of a rotary driving mechanism. FIG. 11 is a schematic structural view of the rotary driving mechanism. FIG. 12 illustrates schematic views showing different state switching processes of the reagent disc control device.

As shown in FIG. 3 to FIG. 5, the reagent disc control device 1 provided by this embodiment includes a locking mechanism 2 and a rotary driving mechanism 3. The locking mechanism 2 is configured to lock or release a reagent disc 4, and the rotary driving mechanism 3 is configured to drive the locking mechanism 2 to move up and down, so that the locking mechanism 2 locks or releases the reagent disc 4. The reagent disc 4 is located above the locking mechanism 2, and the locking mechanism 2 is located above the rotary driving mechanism 3. The rotary driving mechanism 3 includes a first rotary wheel 14 and a second rotary wheel 15. The first rotary wheel 14 and the second rotary wheel 15 are fixed in position relative to each other and are capable of rotating synchronously. The first rotary wheel and the second rotary wheel are combined to form the combined rotary wheel 5. The combined rotary wheel 5 includes a locking region 58 and an unlocking region 59. The locking region 58 is configured to drive the locking mechanism 2 to lock the reagent disc 4, and the unlocking region 59 is configured to drive the locking mechanism 2 to unlock the reagent disc 4. The first rotary wheel 14 and the second rotary wheel 15 in the unlocking region 59 are in a non-flush state. A region where there is a reasonable height difference between the first rotary wheel 14 and the second rotary wheel 15 is also arranged in the unlocking region 59 (as shown in FIG. 2). As shown in FIG. 3 to FIG. 5, the first rotary wheel 14 and the second rotary wheel 15 in a non-flush state means that there is a distance between a first rotary wheel edge 29 and a second rotary wheel edge 30. The locking mechanism 2 includes an inner rod 17 and an outer rod 18, and the inner rod 17 is located inside the outer rod 18. The first rotary wheel 14 is configured to drive the inner rod 17 to move, and the second rotary wheel 15 is configured to drive the outer rod 18 to move. The outer rod 18 is a hollow rod, and the inner rod 17 can run through the outer rod 18 and move up and down in the outer rod 18. The rotary driving mechanism 3 includes the first rotary wheel 14, the second rotary wheel 15 and a support layer 16. The first rotary wheel 14 and the second rotary wheel 15 are installed on the support layer 16 together. The first rotary wheel 14 is on an outer side, and the second rotary wheel 15 is located between the first rotary wheel 14 and the support layer 16.

As shown in FIG. 2, the unlocking region 59 of the combined rotary wheel 5 includes a region where the distance between the first rotary wheel edge 29 and the second rotary wheel edge 30 first gradually increases and then gradually decreases. The combined rotary wheel 5 has an overall shape close to an ellipse which includes a major axis 12 and a minor axis 13 that respectively pass through the center of the ellipse. During the process of the unlocking region 59 coming into contact with the locking mechanism 2, i.e., during the shift from a major axis region to a minor axis region, the second rotary wheel edge 30 is in the shape of a regular ellipse and the first rotary wheel edge 29 is in the shape of an oblique line, which leads to a notch. Thereby, there is a distance between the first rotary wheel edge 29 and the second rotary wheel edge 30 in the unlocking region 59, and this distance first gradually increases and then gradually decreases. The unlocking region 59 includes an ascending region 10 and a releasing region 11, and the distance between the first rotary wheel edge 29 and the second rotary wheel edge 30 in the ascending region 10 first gradually increases and then gradually decreases to a close position so as to gradually push up the inner rod 17 while keeping the outer rod 18 unchanged. A distance between a first rotary wheel edge 31 and a second rotary wheel edge 32 in the releasing region 11 is maintained at the close position so as to make the inner rod 17 and the outer rod 18 leave the reagent disc 4 together while keeping relative positions unchanged. In this embodiment, the close position means that there is a height difference of about 1 mm between the first rotary wheel edge 31 and the second rotary wheel edge 32, because when the inner rod 17 ascends until there is a height difference of about 1 mm from the outer rod 18, the steel balls 33 are completely aligned with the steel ball grooves 34 and the steel balls 33 are completely inside the steel ball grooves 34. In this state, the contact end 20 of the inner rod 17 and the end cover 19 of the outer rod 18 can be kept in contact with the combined rotary wheel 5 all the time and move synchronously, thereby realizing smooth unlocking.

As shown in FIG. 6, by arranging the ascending region 10 and the releasing region 11 in the unlocking region 59 of the combined rotary wheel 5, during the rotation process of the combined rotary wheel 5, in the ascending region 10, the inner rod 17 and the outer rod 18 that have a height difference are allowed to contact the first rotary wheel edge 29 and the second rotary wheel edge 30 that also have a height difference diagonally from the lower side, and then the inner rod 17 is gradually pushed up while keeping the height of the outer rod 18 unchanged. After a proper relative height between the inner rod 17 and the outer rod 18 is achieved, the steel balls 33 in the locking mechanism 2 are retracted. Then, in the releasing region 11, on the premise of keeping the distance between the first rotary wheel edge 29 and the second rotary wheel edge 30 unchanged, i.e. keeping relative positions of the inner rod 17 and the outer rod 18 unchanged, the inner rod 17 and the outer rod 18 are allowed to move down to leave the reagent disc 5, so that the reagent disc 5 is unlocked. The locking region 58 also includes a region where a distance between a first rotary wheel edge 25 and a second rotary wheel edge 26 first gradually increases and then gradually decreases. The locking region 58 includes a first ascending region 7 and a rapid descending region 8. The distance between the first rotary wheel edge 25 and the second rotary wheel edge 26 in the rapid descending region 8 first gradually increases and then gradually decreases so as to make the inner rod 17 descend rapidly and lock the reagent disc 4. The unlocking region 59 and the locking region 58 are respectively located on two sides of the combined rotary wheel 5. When the combined rotary wheel 5 rotates clockwise, the locking region 58 is on a left side, and the unlocking region 59 is on a right side. When the combined rotary wheel 5 rotates counterclockwise, the locking region 58 is on the right side, and the unlocking region 59 is on the left side.

Preferably, as shown in FIG. 10, in the first ascending region 7 of the locking region 58, a first rotary wheel edge 23 is flush with a second rotary wheel edge 24. In the locking region 58 of the combined rotary wheel 5, the first rotary wheel edge 23 gradually ascends to be flush with the second rotary wheel edge 24, instead of to the close position. The first rotary wheel edge 23 in the rapid descending region 8 of the locking region 58 is in a shape of a first oblique line, and the first rotary wheel edge 29 in the ascending region 10 of the unlocking region 59 is in a shape of a second oblique line. A slope of the first oblique line is greater than a slope of the second oblique line. In addition, the first oblique line and the second oblique line are both connected with other parts in the first rotary wheel 14 through arcs, which makes the process of pushing the inner rod 17 smooth and steady. The combined rotary wheel 5 preferably rotates clockwise, and in this case, the locking region 58 is on the left side, and the unlocking region 59 is on the right side.

The combined rotary wheel 5 further includes an initial state region 6, configured to make the locking mechanism 2 return to an initial state. There is a distance between a first rotary wheel edge 21 and a second rotary wheel edge 22 in the initial state region 6. The combined rotary wheel 5 can be in direct contact with the locking mechanism 2 so as to ensure the accuracy of the fluorescence detection reading in the reagent disc 4, and the locking mechanism 2 can flexibly switch between the initial state and the working state. By arranging the initial state region 6 close to the minor axis in the combined rotary wheel 5, there is a distance between the first rotary wheel edge 21 and the second rotary wheel edge 22 in this region, so that the locking mechanism 2 can be in the initial state when in this position. At this time, the springs in the locking mechanism 2 are both in a natural uncompressed and unstretched state. After entering the working state, the springs of the locking mechanism 2 are compressed. The distance between the first rotary wheel edge 21 and the second rotary wheel edge 22 in the initial state region 6 first gradually increases and then gradually decreases. When the locking mechanism 2 is in a position where the distance between the first rotary wheel edge 21 and the second rotary wheel edge 22 in the initial state region 6 is the largest, the locking mechanism 2 is in the initial state. When the locking mechanism 2 is in other positions of the combined rotary wheel 5, the locking mechanism 2 is in the working state. The combined rotary wheel 5 further includes a locking state region 9, configured to maintain the reagent disc 4 in a locked state so as to perform centrifugal rotation or analysis and detection. When the reagent disc 4 is in the locked state, centrifugation, and analysis and detection can be performed. In this case, the lower end of the locking mechanism 2 is suspended and is not in contact with the combined rotary wheel 5. Therefore, during this process, the combined rotary wheel 5 only needs to be in the minor axis region of the ellipse without contacting the locking mechanism 2.

As shown in FIG. 10, the combined rotary wheel 5 includes the initial state region 6, the first ascending region 7, the rapid descending region 8, the locking state region 9, the ascending region 10 and the releasing region 11. During the rotation process of the combined rotary wheel 5, each region cooperates with the locking mechanism 2 such that the locking mechanism 2 is respectively in the initial state, the first ascending state, the rapid descending state, the locking state, the second ascending state and the releasing state. The initial state region 6 and the locking state region 9 are respectively located in edge regions where the minor axis 13 of the combined rotary wheel 5 is located, and the first ascending region 7, the rapid descending region 8, the ascending region 10 and the releasing region 11 are closer to edge regions where the major axis 12 is located.

The rotary driving mechanism 3 further includes the support layer 16. The first rotary wheel 14 and the second rotary wheel 15 are installed on the support layer 16 together. The first rotary wheel 14 is on an outer side, and the second rotary wheel 15 is located between the first rotary wheel 14 and the support layer 16. The first rotary wheel 14 and the second rotary wheel 15 are fixed in position relative to each other and are capable of rotating synchronously.

The locking mechanism 2 is located above the rotary driving mechanism 3. The locking mechanism 2 includes the inner rod 17 and the outer rod 18, and the inner rod 17 is located inside the outer rod 18. The first rotary wheel 14 is configured to drive the inner rod 17 to move up and down, and the second rotary wheel 15 is configured to drive the outer rod 18 to move up and down. The outer rod 18 is a hollow rod, and the inner rod 17 can run through the outer rod 18 and move up and down in the outer rod 18. The lower end of the outer rod 18 is provided with the end cover 19, and the lower end of the inner rod 17 is provided with the contact end 20. During an operation process of the locking mechanism 2, the contact end 20 is extendable out of the end cover 19 or retractable into the end cover. During the rotation process of the combined rotary wheel 5, the contact end 20 is in direct contact with a surface of the first rotary wheel 14, and the end cover 19 is in direct contact with a surface of the second rotary wheel 15.

When the locking mechanism 2 is in the initial state, the initial state region 6 of the combined rotary wheel 5 cooperates with the locking mechanism 2, the first rotary wheel edge 21 in the initial state region 6 is lower than the second rotary wheel edge 22, the contact end 20 is in contact with the first rotary wheel edge 21, and the end cover 19 is in contact with the second rotary wheel edge 22. When the locking mechanism 2 is in the first ascending state, the first ascending region 7 of the combined rotary wheel 5 cooperates with the locking mechanism 2, the first rotary wheel edge 23 in the first ascending region 7 gradually ascends to be flush with the second rotary wheel edge 24, the contact end 20 is in contact with the first rotary wheel edge 23, and the end cover 19 is in contact with the second rotary wheel edge 24. When the locking mechanism 2 is in the rapid descending state, the rapid descending region 8 of the combined rotary wheel 5 cooperates with the locking mechanism 2, the first rotary wheel edge 25 in the rapid descending region 8 descends rapidly, the end cover 19 is in contact with the second rotary wheel edge 26, and the contact end 20 is unable to contact the first rotary wheel edge 25. When the locking mechanism 2 is in the locking state, the locking state region 9 of the combined rotary wheel 5 cooperates with the locking mechanism 2, the first rotary wheel edge 27 in the locking state region 9 ascends and is flush with the second rotary wheel edge 28, the end cover 19 is unable to contact the second rotary wheel edge 28, and the contact end 20 is unable to contact the first rotary wheel edge 27. When the locking mechanism 2 is in the second ascending state, the ascending region 10 of the combined rotary wheel 5 cooperates with the locking mechanism 2, the first rotary wheel edge 29 in the ascending region 10 descends and gradually ascends to be close to the second rotary wheel edge 30, the contact end 20 is in contact with the first rotary wheel edge 29, and the end cover 19 is in contact with the second rotary wheel edge 30. When the locking mechanism 2 is in the releasing state, the releasing region 11 of the combined rotary wheel 5 cooperates with the locking mechanism 2, the first rotary wheel edge 31 in the releasing region 11 is kept close to the second rotary wheel edge 32, the contact end 20 is in contact with the first rotary wheel edge 31, and the end cover 19 is in contact with the second rotary wheel edge 32.

As shown in FIG. 8 to FIG. 9, the locking mechanism 2 further includes the steel balls 33, and the inner rod 17 is provided with the steel ball grooves 34. The steel balls 33 are capable of entering the steel ball grooves 34 or sliding out of the steel ball grooves 34 during an up-and-down movement process of the inner rod 17. The outer rod 18 is provided with two hollowed circular holes 58. The two steel balls 33 can respectively protrude out of the two circular holes 58 to increase a lateral size of the outer rod 18 at the position of the circular holes 58, so that the outer rod can be clamped with the mounting hole 50 with a smaller size in the reagent disc. When the locking mechanism 2 extends into the reagent disc 4 and the steel balls 33 slide out of the steel ball grooves 34, the steel balls 33 can clamp, fix and lock the reagent disc 4. When the steel balls 33 return to the steel ball grooves 34, the reagent disc 4 is unlocked and released. In the reagent disc control device 1, the locking mechanism 2 is in a vertical state. When the upper end 35 of the inner rod is flush with the upper end 36 of the outer rod, the steel ball grooves 34 in the inner rod 17 are just at the positions where the steel balls 33 are located, and the steel balls 33 can slide and be accommodated in the steel ball grooves 34. When the inner rod 17 moves down such that the upper end 35 of the inner rod is lower than the upper end 36 of the outer rod, the steel ball grooves 34 in the inner rod 17 move down and leave the positions where the steel balls 33 are located, and the steel balls 33 are forced to slide out of the steel ball grooves 34. Since other positions of the inner rod 17 are all larger in size than the positions where the steel ball grooves 33 are located, the steel balls 33 are pressed outward to protrude so as to clamp the reagent disc 4.

As shown in FIG. 5 to FIG. 9, the outer rod 18 is provided with a first spring 38 configured to control an up-and-down movement distance of the outer rod 18. The inner rod 17 is provided with a second spring 37 configured to control an up-and-down movement distance of the inner rod 17. The first spring 38 has larger elasticity. The contact end 20 is provided with a flange 39 configured to limit a distance that the contact end 20 extends out of the end cover 19. The lower end of the outer rod 18 is provided with a groove 84 for the contact end 20 with the flange 39 to move up and down. An upper end 40 of the second spring 37 is connected to an inner wall of the outer rod 18, and a lower end 41 is connected to the flange 39. The inner wall of the outer rod 18 forms a platform 43 at the contact position of the second spring 37, and the second spring 37 is connected and fixed with the platform 43.

The reagent disc control device 1 further includes a centrifugal driving component 44. The centrifugal driving component 44 is hollow, and the locking mechanism 2 runs through the centrifugal driving component 44 and contacts the reagent disc 4. An upper end 45 of the first spring 38 is connected to a bottom surface 47 of the centrifugal driving component 44, and a lower end 46 is connected to the end cover 19.

Under the cooperative action of the inner rod 17, the outer rod 18, the steel balls 33, the steel ball grooves 34, the first spring 38 and the second spring 37 of the reagent disc control device 1, the locking mechanism 2 switches among the initial state, the first ascending state, the rapid descending state, the locking state, the second ascending state and the releasing state to lock and release the reagent disc 4, and needs to stay in the vertical state with the assistance of the centrifugal driving component 44.

As shown in FIG. 11, the rotary driving mechanism 3 further includes two photoelectric sensors 54. The two photoelectric sensors 54 are respectively located on a left side and a right side of the support layer 16 and configured to sense whether the combined rotary wheel 5 is in the initial state. When the combined rotary wheel 5 is in the initial state region, the notch 55 in the combined rotary wheel 5 can be sensed by the photoelectric sensor 56 on the left side, but not by the photoelectric sensor on the right side. When the combined rotary wheel 5 is in the locking state region, the notch 55 in the combined rotary wheel 5 can be sensed by the photoelectric sensor 57 on the right side, but not by the photoelectric sensor on the left side. In this way, the position of the combined rotary wheel 5 can be indicated correctly. Of course, the left side and the right side here can be interchanged as needed. The combined rotary wheel 5 provided by this embodiment is made of a wear-resistant-material (such as nylon PA66 or nylon PA6), and it can ensure the control accuracy and can still complete the locking and releasing of the reagent disc 4 after operating for more than 240000 times in an aging test.

### Embodiment 2: Reagent disc and reagent packaging mechanism thereof provided by the invention

The structures of a reagent disc and a reagent packaging mechanism provided by this embodiment are shown in FIG. 7 and FIG. 13 to FIG. 16. FIG. 7 is a schematic structural view of the reagent disc. FIG. 13 is an exploded view of the reagent disc. FIG. 14 is a schematic structural view (top view) of the reagent packaging mechanism. FIG. 15 illustrates schematic structural views before and after the reagent packaging mechanism is opened, where the left view is the schematic structural view before the reagent packaging mechanism is opened, and the right view is the schematic structural view after the reagent packaging mechanism is opened. FIG. 16 illustrates schematic views showing an opening process of the reagent packaging mechanism.

As shown in FIG. 13, the reagent disc 4 includes a reagent packaging mechanism 85. The reagent packaging mechanism 85 includes a positioned end 86 and a suspended end 60. The positioned end 86 is detachably positioned and fixed in the reagent disc 4, and the suspended end 60 is in a suspended state, so that the reagent packaging mechanism 85 can keep a certain distance from a bottom plate 61 of the reagent disc 4. As shown in FIG. 15, the suspended end 60 of the reagent packaging mechanism 85 is provided with a liquid outlet 63, and the liquid outlet 63 corresponds to a liquid inlet 75 in the reagent disc 4 in position, and the liquid outlet 63 is covered with the sealing film 62. A tail end 64 of an extended part of the sealing film 62 and the positioned end 86 of the reagent packaging mechanism 85 are positioned inside the reagent disc 4 together. Theoretically, the liquid outlet 63 may be provided either at the suspended end 60 or at the positioned end 86. In order to make the reagent packaging mechanism 85 simpler in structure and lower in cost and improve the reliability of opening the reagent packaging mechanism 85, the liquid outlet 63 is preferably provided at the suspended end 60.

As shown in FIG. 14, the positioned end 86 of the reagent packaging mechanism 85 and an inside of the reagent disc 4 are positioned through cooperation between positioning pins 65 and positioning holes 66. When the inside of the reagent disc 4 is provided with the protruding positioning pins 65, then the positioned end 86 of the reagent packaging mechanism 85 is provided with the positioning holes 66 matched with the positioning pins. When the positioned end 86 of the reagent packaging mechanism 85 is provided with the protruding positioning pins 65, then the inside of the reagent disc 4 is provided with the positioning holes 66 matched with the positioning pins. Preferably, the inside of the reagent disc 4 is provided with the protruding positioning pins 65. The positioned end 86 of the reagent packaging mechanism 85 is provided with first positioning holes 67, and the tail end 64 of the extended part of the sealing film 62 is provided with second positioning holes 68. The positioned end 86 of the reagent packaging mechanism 85 and the tail end 64 of the extended part of the sealing film 62 are positioned through cooperation between the first positioning holes 67, the second positioning holes 68 and the positioning pins 65 inside the reagent disc 4. A number of the positioning pins 65 is at least two. A number of the first positioning holes 67 and the second positioning holes 68 is at least two and is matched with the number of the positioning pins 65. The first positioning holes 67 and the second positioning holes 68 are sequentially sleeved on the positioning pins 65 from top to bottom. The number of the positioning pins 65 is preferably two. When the reagent packaging mechanism 85 is to be installed into the reagent disc 4, the two second positioning holes 68 in the sealing film 62 of the reagent packaging mechanism 85 and the two first positioning holes 67 in the main body of the reagent packaging mechanism 85 are sequentially sleeved on the two positioning pins 65 on the bottom plate 61 of the base plate 70 of the reagent disc. Then, the base plate 70 of the reagent disc 4 is fixed to the cover plate 69 by gluing or bonding. A bottom 71 of the sealing film 62 forms an openable pull ring, through which the sealing film 62 can be pulled open to release the reagent therein with the cooperation of the locking mechanism 2. The reagent packaging mechanism 85 is ring-shaped and is provided with a through hole 72 in a middle. The sealing film 62 includes a sealing part 73 and the extended part 74. The sealing part 73 is configured to seal the liquid outlet, and the extended part 74 is connected to the sealing part 73. After being folded, the extended part extends across the through hole 72 and is fixed by the positioning pins 65.

As shown in FIG. 13, the reagent packaging mechanism 85 is located in a mounting hole 50 of the reagent disc 4. When the locking mechanism 2 extends into the mounting hole 50 of the reagent disc 4, it also extends into the through hole 72 of the reagent packaging mechanism 85. Since the sealing film 62 extends across the through hole 72 after being folded reversely, when the locking mechanism 2 extends into the through hole 72, the sealing film 62 will be pushed up, so that the reagent packaging mechanism 85 is opened. As shown in FIG. 14, the positioned end 86 of the reagent packaging mechanism 85 is recessed downward to form a notch in the ring shape. The notch in the reagent packaging mechanism 85 is fan-shaped, and the tail end 64 of the extended part is also fan-shaped to match the notch. The fan-shaped tail end 64 of the extended part improves the fixation effect of the sealing film 62, and the fan-shaped notch also improves the fixation effect of the reagent packaging mechanism 85 through the positioned end 86. As shown in FIG. 15, the liquid outlet 63 is located at a bottom of the reagent packaging mechanism 85. The reagent disc 4 includes the cover plate 69 and the base plate 70, and the reagent packaging mechanism 85 is located between the cover plate 69 and the base plate 70. When the sealing film 62 is pushed up by the locking mechanism 2, the sealing film 62 covering the liquid outlet 63 is opened (the left view in FIG. 15), the liquid outlet 63 is exposed, and the reagent in the reagent packaging mechanism 85 flows out through the liquid outlet 63. As shown in FIG. 13, the reagent packaging mechanism 85 is located above the mounting hole 50 of the reagent disc 4, and the through hole 72 of the reagent packaging mechanism 85 is in communication with the mounting hole 50. When the locking mechanism 2 enters the through hole 72 of the reagent packaging mechanism 85 through the mounting hole 50, the sealing film 62 can be torn open, and the reagent disc 4 can be locked.

The detail embodiments are also included this application as below.
1. A reagent disc control device, comprising a rotary driving mechanism for controlling a locking mechanism to move, wherein the rotary driving mechanism comprises a combined rotary wheel formed by a first rotary wheel and a second rotary wheel, the combined rotary wheel comprises a locking region and an unlocking region, the locking region is configured to drive the locking mechanism to lock a reagent disc, and the unlocking region is configured to drive the locking mechanism to unlock the reagent disc; and the first rotary wheel and the second rotary wheel in the unlocking region are in a non-flush state.
2. The reagent disc control device according to clause 1, wherein the non-flush state comprises there being a distance between a first rotary wheel edge and a second rotary wheel edge; the locking mechanism comprises an inner rod and an outer rod, and the inner rod is located inside the outer rod; and the first rotary wheel is configured to drive the inner rod to move, and the second rotary wheel is configured to drive the outer rod to move.
3. The reagent disc control device according to clause 2, wherein the unlocking region comprises a region where the distance between the first rotary wheel edge and the second rotary wheel edge first gradually increases and then gradually decreases.
4. The reagent disc control device according to clause 3, wherein the unlocking region comprises an ascending region and a releasing region, and the distance between the first rotary wheel edge and the second rotary wheel edge in the ascending region first gradually increases and then gradually decreases to a close position so as to gradually push up the inner rod while keeping the outer rod unchanged; and a distance between a first rotary wheel edge and a second rotary wheel edge in the releasing region is maintained at the close position so as to make the inner rod and the outer rod leave the reagent disc together while keeping relative positions unchanged.
5. The reagent disc control device according to clause 4, wherein the locking region also comprises a region where a distance between a first rotary wheel edge and a second rotary wheel edge first gradually increases and then gradually decreases.
6. The reagent disc control device according to clause 5, wherein the locking region comprises a first ascending region and a rapid descending region; and the distance between the first rotary wheel edge and the second rotary wheel edge in the rapid descending region first gradually increases and then gradually decreases so as to make the inner rod descend rapidly and lock the reagent disc.
7. The reagent disc control device according to clause 6, wherein the unlocking region and the locking region are respectively located on two sides of the combined rotary wheel; when the combined rotary wheel rotates clockwise, the locking region is on a left side, and the unlocking region is on a right side; and when the combined rotary wheel rotates counterclockwise, the locking region is on the right side, and the unlocking region is on the left side.
8. The reagent disc control device according to clause 7, wherein in the first ascending region of the locking region, a first rotary wheel edge is flush with a second rotary wheel edge.
9. The reagent disc control device according to clause 8, wherein the first rotary wheel edge in the rapid descending region of the locking region is in a shape of a first oblique line, and the first rotary wheel edge in the ascending region of the unlocking region is in a shape of a second oblique line; and a slope of the first oblique line is greater than a slope of the second oblique line.
10. The reagent disc control device according to clause 9, wherein the combined rotary wheel rotates clockwise, and in this case, the locking region is on the left side, and the unlocking region is on the right side.
11. The reagent disc control device according to clause 10, further comprising an initial state region, configured to make the locking mechanism return to an initial state; and there is a distance between a first rotary wheel edge and a second rotary wheel edge in the initial state region.
12. The reagent disc control device according to clause 11, wherein the distance between the first rotary wheel edge and the second rotary wheel edge in the initial state region first gradually increases and then gradually decreases; when the locking mechanism is in a position where the distance between the first rotary wheel edge and the second rotary wheel edge in the initial state region is the largest, the locking mechanism is in the initial state; and when the locking mechanism is in other positions of the combined rotary wheel, the locking mechanism is in a working state.
13. The reagent disc control device according to clause 12, further comprising a locking state region, configured to maintain the reagent disc in a locked state so as to perform centrifugal rotation or analysis and detection.
14. The reagent disc control device according to clause 13, wherein the combined rotary wheel comprises the initial state region, the first ascending region, the rapid descending region, the locking state region, the ascending region and the releasing region; and during a rotation process of the combined rotary wheel, each region cooperates with the locking mechanism such that the locking mechanism is respectively in the initial state, a first ascending state, a rapid descending state, a locking state, a second ascending state and a releasing state.
15. The reagent disc control device according to clause 14, wherein the combined rotary wheel has a shape of an ellipse comprising a major axis and a minor axis, the first ascending region, the rapid descending region, the ascending region and the releasing region are close to the major axis, and the initial state region and the locking state region are close to the minor axis.
16. The reagent disc control device according to clause 15, wherein the first rotary wheel and the second rotary wheel are installed on a support layer together; the first rotary wheel is on an outer side, and the second rotary wheel is located between the first rotary wheel and the support layer; and the first rotary wheel and the second rotary wheel are fixed in position relative to each other and are capable of rotating synchronously.
17. The reagent disc control device according to clause 16, wherein the first rotary wheel and the second rotary wheel are respectively in direct or indirect contact with the inner rod and the outer rod.
18. The reagent disc control device according to clause 17, wherein a lower end of the outer rod is provided with an end cover, and a lower end of the inner rod is provided with a contact end; during an operation process of the locking mechanism, the contact end is extendable out of the end cover or retractable into the end cover; and during the rotation process of the combined rotary wheel, the contact end is in direct contact with a surface of the first rotary wheel, and the end cover is in direct contact with a surface of the second rotary wheel.
19. The reagent disc control device according to clause 18, wherein when the locking mechanism is in the initial state, the initial state region of the combined rotary wheel cooperates with the locking mechanism, the first rotary wheel edge in the initial state region is lower than the second rotary wheel edge, the contact end is in contact with the first rotary wheel edge, and the end cover is in contact with the second rotary wheel edge;
   when the locking mechanism is in the first ascending state, the first ascending region of the combined rotary wheel cooperates with the locking mechanism, the first rotary wheel edge in the first ascending region gradually ascends to be flush with the second rotary wheel edge, the contact end is in contact with the first rotary wheel edge, and the end cover is in contact with the second rotary wheel edge;
   when the locking mechanism is in the rapid descending state, the rapid descending region of the combined rotary wheel cooperates with the locking mechanism, the first rotary wheel edge in the rapid descending region descends rapidly, the end cover is in contact with the second rotary wheel edge, and the contact end is unable to contact the first rotary wheel edge;
   when the locking mechanism is in the locking state, the locking state region of the combined rotary wheel cooperates with the locking mechanism, the first rotary wheel edge in the locking state region ascends and is flush with the second rotary wheel edge, the end cover is unable to contact the second rotary wheel edge, and the contact end is unable to contact the first rotary wheel edge; when the locking mechanism is in the second ascending state, the ascending region of the combined rotary wheel cooperates with the locking mechanism, the first rotary wheel edge in the ascending region gradually ascends to be close to the second rotary wheel edge, the contact end is in contact with the first rotary wheel edge, and the end cover is in contact with the second rotary wheel edge; and
   when the locking mechanism is in the releasing state, the releasing region of the combined rotary wheel cooperates with the locking mechanism, the first rotary wheel edge in the releasing region is kept close to the second rotary wheel edge, the contact end is in contact with the first rotary wheel edge, and the end cover is in contact with the second rotary wheel edge.
20. The reagent disc control device according to clause 19, wherein the locking mechanism further comprises steel balls, and the inner rod is provided with steel ball grooves; and the steel balls are capable of entering the steel ball grooves or sliding out of the steel ball grooves during an up-and-down movement process of the inner rod.
21. The reagent disc control device according to clause 20, wherein the outer rod is provided with a first spring configured to control an up-and-down movement distance of the outer rod; the inner rod is provided with a second spring configured to control an up-and-down movement distance of the inner rod; the contact end is provided with a flange configured to limit a distance that the contact end extends out of the end cover; and an upper end of the second spring is connected to an inner wall of the outer rod, and a lower end is connected to the flange.
22. The reagent disc control device according to clause 1, further comprising a centrifugal driving component, configured to drive the reagent disc to rotate centrifugally; wherein the centrifugal driving component is hollow, and the locking mechanism runs through the centrifugal driving component and contacts the reagent disc; and an upper end of the first spring is connected to a bottom surface of the centrifugal driving component, and a lower end is connected to the end cover.
23. A method of controlling a reagent disc, comprising the following steps:
   (1) placing a reagent disc into a reagent disc control device;
   (2) starting a rotary driving mechanism, and driving a locking mechanism into a locking state through rotation of a combined rotary wheel in the rotary driving mechanism such that the reagent disc is locked;
   (3) performing centrifugal rotation and detection on the reagent disc; and
   (4) allowing the combined rotary wheel to continue to rotate, driving an inner rod of the locking mechanism to gradually move up close to an outer rod, and then allowing the inner rod and the outer rod to leave the reagent disc together while keeping relative positions unchanged such that the reagent disc is released.
24. The control method according to clause 23, wherein in step (4), after the reagent disc is released, the combined rotary wheel continues to rotate, and the locking mechanism returns to an initial state; in step (1), the locking mechanism is in the initial state; when the locking mechanism is in the initial state, an initial state region of the combined rotary wheel cooperates with the locking mechanism; and springs in the locking mechanism are not deformed, and the inner rod extends out of the outer rod from a lower side.
25. The method according to clause 24, wherein in step (2), the rotary driving mechanism is started, the inner rod and the outer rod of the locking mechanism are both pushed to highest positions through the rotation of the combined rotary wheel in the rotary driving mechanism, then the inner rod descends rapidly, steel balls of the locking mechanism are popped out, and the reagent disc is locked.

All patents and publications mentioned in the specification of the invention indicate that these are disclosed techniques in the art and can be used by the invention. All patents and publications cited herein are likewise listed in the references as if each publication is specifically and separately referenced. The invention described herein may be implemented in the absence of any one or more elements, and one or more limitations, which are not specifically stated herein. For example, the terms "comprising", "essentially consisting of" and "consisting of" in each example here may be replaced by the rest 2 terms. The term "a/an" here merely means "one", but does not exclude including 2 or more instead of including only one. The terms and expressions which have been employed here are descriptive rather than restrictive, and there is no intention to suggest that these terms and expressions in this description exclude any equivalents, but it is to be understood that any appropriate changes or modifications can be made within the scope of the invention and appended claims. It can be understood that the embodiments described in the invention are some preferred embodiments and features. Any person of ordinary skill in the art can make some modifications and changes according to the spirit of the description of the invention. These modifications and changes are also considered to fall within the scope of the invention and the scope limited by independent claims and dependent claims.

## Claims

1. A reagent disc control device, comprising a rotary driving mechanism for controlling a locking mechanism to move, wherein the rotary driving mechanism comprises a combined rotary wheel formed by a first rotary wheel and a second rotary wheel, the combined rotary wheel comprises a locking region and an unlocking region, the locking region is configured to drive the locking mechanism to lock a reagent disc, and the unlocking region is configured to drive the locking mechanism to unlock the reagent disc; and the first rotary wheel and the second rotary wheel in the unlocking region are in a non-flush state.

2. The reagent disc control device according to claim 1, wherein the non-flush state comprises there being a distance between a first rotary wheel edge and a second rotary wheel edge; the locking mechanism comprises an inner rod and an outer rod, and the inner rod is located inside the outer rod; and the first rotary wheel is configured to drive the inner rod to move, and the second rotary wheel is configured to drive the outer rod to move.

3. The reagent disc control device according to any one of claims 1-2, wherein the unlocking region comprises a region where the distance between the first rotary wheel edge and the second rotary wheel edge first gradually increases and then gradually decreases.

4. The reagent disc control device according to any one of claims 1-3, wherein the unlocking region comprises an ascending region and a releasing region, and the distance between the first rotary wheel edge and the second rotary wheel edge in the ascending region first gradually increases and then gradually decreases to a close position so as to gradually push up the inner rod while keeping the outer rod unchanged; and a distance between a first rotary wheel edge and a second rotary wheel edge in the releasing region is maintained at the close position so as to make the inner rod and the outer rod leave the reagent disc together while keeping relative positions unchanged.

5. The reagent disc control device according to any one of claims 1-4, wherein the locking region also comprises a region where a distance between a first rotary wheel edge and a second rotary wheel edge first gradually increases and then gradually decreases.

6. The reagent disc control device according to any one of claims 1-5, wherein the locking region comprises a first ascending region and a rapid descending region; and the distance between the first rotary wheel edge and the second rotary wheel edge in the rapid descending region first gradually increases and then gradually decreases so as to make the inner rod descend rapidly and lock the reagent disc.

7. The reagent disc control device according to any one of claims 1-66, wherein the unlocking region and the locking region are respectively located on two sides of the combined rotary wheel; when the combined rotary wheel rotates clockwise, the locking region is on a left side, and the unlocking region is on a right side; and when the combined rotary wheel rotates counterclockwise, the locking region is on the right side, and the unlocking region is on the left side.

8. The reagent disc control device according to any one of claims 1-7, wherein in the first ascending region of the locking region, a first rotary wheel edge is flush with a second rotary wheel edge.

9. The reagent disc control device according to any one of claims 1-8, wherein the first rotary wheel edge in the rapid descending region of the locking region is in a shape of a first oblique line, and the first rotary wheel edge in the ascending region of the unlocking region is in a shape of a second oblique line; and a slope of the first oblique line is greater than a slope of the second oblique line.

10. The reagent disc control device according to any one of claims 1-9, wherein the combined rotary wheel rotates clockwise, and in this case, the locking region is on the left side, and the unlocking region is on the right side.

11. The reagent disc control device according to any one of claims 1-10, further comprising an initial state region, configured to make the locking mechanism return to an initial state; and there is a distance between a first rotary wheel edge and a second rotary wheel edge in the initial state region.

12. The reagent disc control device according to any one of claims 3-11, wherein the distance between the first rotary wheel edge and the second rotary wheel edge in the initial state region first gradually increases and then gradually decreases; when the locking mechanism is in a position where the distance between the first rotary wheel edge and the second rotary wheel edge in the initial state region is the largest, the locking mechanism is in the initial state; and when the locking mechanism is in other positions of the combined rotary wheel, the locking mechanism is in a working state.

13. The reagent disc control device according to any one of claims 1-12, further comprising a locking state region, configured to maintain the reagent disc in a locked state so as to perform centrifugal rotation or analysis and detection.

14. The reagent disc control device according to claim 13, wherein the combined rotary wheel comprises the initial state region, the first ascending region, the rapid descending region, the locking state region, the ascending region and the releasing region; and during a rotation process of the combined rotary wheel, each region cooperates with the locking mechanism such that the locking mechanism is respectively in the initial state, a first ascending state, a rapid descending state, a locking state, a second ascending state and a releasing state.

15. The reagent disc control device according to claim 14, wherein the combined rotary wheel has a shape of an ellipse comprising a major axis and a minor axis, the first ascending region, the rapid descending region, the ascending region and the releasing region are close to the major axis, and the initial state region and the locking state region are close to the minor axis.

16. The reagent disc control device according to claim 15, wherein the first rotary wheel and the second rotary wheel are installed on a support layer together; the first rotary wheel is on an outer side, and the second rotary wheel is located between the first rotary wheel and the support layer; and the first rotary wheel and the second rotary wheel are fixed in position relative to each other and are capable of rotating synchronously.
